(19) Europäisches Patentamt
European Patent Office
Office européen des brevets

(11) EP 4 786 558 A1

(12) EUROPEAN PATENT APPLICATION
published in accordance with Art. 153(4) EPC

(43) Date of publication:
**05.08.2026 Bulletin 2026/32**

(21) Application number: **24871509.6**

(22) Date of filing: **31.07.2024**

(51) International Patent Classification (IPC):
***C09J 201/10*** *(2006.01)* ***C09J 11/04*** *(2006.01)*
***C09J 11/06*** *(2006.01)* ***C09J 171/02*** *(2006.01)*
***C09K 5/14*** *(2006.01)* ***H01M 10/613*** *(2014.01)*
***H01M 10/625*** *(2014.01)* ***H01M 10/647*** *(2014.01)*
***H01M 10/651*** *(2014.01)* ***H01M 10/653*** *(2014.01)*
***H01M 10/6556*** *(2014.01)*

(52) Cooperative Patent Classification (CPC):
**C09J 11/04; C09J 11/06; C09J 171/02; C09J 201/10; C09K 5/14; H01M 10/613; H01M 10/625; H01M 10/647; H01M 10/651; H01M 10/653; H01M 10/6556;** Y02E 60/10

(86) International application number:
**PCT/JP2024/027406**

(87) International publication number:
**WO 2025/069707 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170651**
**31.01.2024 JP 2024013671**

(71) Applicant: **Sekisui Chemical Co., Ltd.**
**Osaka-shi, Osaka 530-8565 (JP)**

(72) Inventors:
- **IWAMOTO, Tatsuya**
  **Mishima-gun, Osaka 618-0021 (JP)**
- **IINO, Tatsuya**
  **Mishima-gun, Osaka 618-0021 (JP)**
- **ARAI, Yoshito**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) CURABLE ADHESIVE FOR BATTERY

(57) The curable battery adhesive of the present invention comprises a first agent comprising an organic polymer having a hydrolyzable silyl group and a thermally conductive filler, and provided in a first container, and a second agent comprising a silanol condensation catalyst and a thermally conductive filler, and provided in a second container, wherein a cured product obtained by curing in an environment having 25°C and 50% RH for 2 weeks a curable battery adhesive composition obtained by mixing the first agent and the second agent has a shear adhesive strength of 0.5 to 2.5 MPa in a tensile shear test, the cured product when having a thickness of 2 mm has an elongation under maximum stress of 0.3 mm or more, and the cured product has a thermal conductivity of 1.5 W/m·K or more. The present invention can provide a curable battery adhesive, a cured product of which has suitable adhesion, a high thermal conductivity, and excellent conformability to the expansion and contraction of battery cells.

EP 4 786 558 A1

## Description

### Technical Field

The present invention relates to a curable battery adhesive.

### Background Art

Thermally conductive compositions that contain a thermally conductive filler and that are curable and liquid are widely known and, for example, such a thermally conductive composition is provided between a heating element and a heat dissipating element, then cured to form a cured product, and used as a thermally conductive member such as a heat dissipating gap filler for transferring heat produced by the heating element to the heat dissipating element.

In recent years, given the market backdrop of steadily growing production of electric vehicles (EVs), there has been an increasing demand for two-component, room temperature-curable, heat dissipating gap fillers for lithium-ion batteries (LiBs). In lithium-ion batteries, from the viewpoint of heat dissipation, a thermally conductive composition is often provided between components such as a battery cell, a battery module, and a battery pack in order to secure the components and enhance heat dissipation.

Patent Literature 1 discloses an invention relating to a thermally conductive curable composition comprising a first part and a second part as a thermal interface material having a high thermal conductivity, wherein the first part comprises a catalyst, a ceramic filler mixture, a low-volatility organic liquid, and water, and the second part comprises a silyl-modified reactive polymer, a low-volatility organic liquid, and a ceramic filler mixture.

Patent Literature 2 discloses a moisture-curable composition that has a high thermal conductivity and that is suitable as a gap filler, a sealant or an adhesive for batteries, wherein the moisture-curable composition comprises a reactive silane group-containing organic polymer, a specific filler, a dispersion additive, a curing catalyst, and a plasticizer in specific amounts.

### Citation List

### Patent Literature

PTL1: JP 2022-521790 A

PTL2: JP 2022-520317 A

### Summary of Invention

### Technical Problem

To further popularize EVs in the future, an increased driving range and a shorter charging time are required as improvements to EV performance. On the other hand, to achieve sustainable EV development while preserving the global environment, it is important to reduce waste during the course of EV production and recycle used batteries, and thus a battery structure that facilitates reworking and recycling is required.

To improve the driving range, the battery module housing is eliminated to enhance the energy density through increased battery packing efficiency and to reduce weight. By obviating the housing, however, this design approach makes it difficult to mechanically secure battery cells. Accordingly, the battery cells need be secured to a cooling plate or the like using a thermally conductive resin composition, and an increased adhesion of the thermally conductive resin composition is required.

On the other hand, when quality defects are found on inspection after assembling battery components during the course of EV production, or when recycling battery cells and cooling plates from used EVs recovered from the market, the cells and the cooling plates are required to be easily removed from the thermally conductive resin composition that is provided therebetween.

Urethane-based resin compositions are commonly used as thermally conductive resin compositions for LiBs. However, urethane-based resin compositions have excessive adhesion, and are thus problematic in that deformation occurs when attempting to remove components such as cooling plates due to insufficient strength of the components, thus making it impossible to recycle the removed components.

Shortening the charging time has also revealed the problem involving the thermally conductive resin compositions. Rapid charging in a short period of time likely causes the temperature of battery cells to be higher than the temperature resulting from conventional charging, and thus two ways of quality improvement are required for the thermally conductive resin compositions. One is an improved thermal conductivity to enhance the efficiency of cooling battery cells, and the other is an improved conformability to the expansion and contraction of battery cells. With poor conformability, the thermally conductive compositions likely separate from battery cells, resulting in poor heat dissipation. These two measures are in a trade-off relationship. That is to say, the filling factor of a thermally conductive filler needs to be increased to improve thermal conductivity, but this makes the compositions less deformable and impairs conformability.

Conventional thermally conductive compositions for batteries have room for improvement from the viewpoint that the cured products thereof should have the physical property balance of having a high thermal conductivity and having conformability to the expansion and contraction of battery cells.

Accordingly, an object of the present invention is to provide a curable battery adhesive capable of providing a cured product having "suitable adhesion" that allows components of a battery structure to be secured with appropriate adhesion and thus maintain a certain level of strength while allowing the components to be easily removed, and having a high thermal conductivity as well as conformability to the expansion and contraction of battery cells.

Solution to Problem

The inventors conducted diligent research. As a result, the inventors found that the problems can be solved by a curable battery adhesive comprising a first agent comprising a silanol condensation catalyst and a thermally conductive filler, and a second agent comprising an organic polymer having a hydrolyzable silyl group and a thermally conductive filler, wherein a cured product has shear adhesive strength, elongation under maximum stress, and thermal conductivity that are within specific ranges, and completed the present invention.

The present invention provides [1] to [15] below.

[1] A curable battery adhesive, comprising:

a first agent comprising a silanol condensation catalyst and a thermally conductive filler, and provided in a first container, and
a second agent comprising an organic polymer having a hydrolyzable silyl group and a thermally conductive filler, and provided in a second container,
a cured product obtained by curing in an environment of 25°C and 50% RH for 2 weeks a curable battery adhesive composition obtained by mixing the first agent and the second agent having a shear adhesive strength of 0.5 to 2.5 MPa in a tensile shear test,
the cured product when having a thickness of 2 mm having an elongation under maximum stress of 0.3 mm or more in the tensile shear test, and
the cured product having a thermal conductivity of 1.5 W/m·K or more.

[2] The curable battery adhesive according to [1], wherein

a content of the thermally conductive filler in the curable battery adhesive composition is 60 to 85% by volume, and the thermally conductive filler comprises a thermally conductive filler having a hydroxyl group on a surface.

[3] The curable battery adhesive according to [1] or [2], wherein

a content of the thermally conductive filler in the curable battery adhesive composition is 60 to 85% by volume, and the thermally conductive filler comprises metal hydroxide, and
a total surface area of the metal hydroxide per 100 g of the organic polymer having a hydrolyzable silyl group in the curable battery adhesive composition is 200 to 1500 $m^2$.

[4] The curable battery adhesive according to any one of [1] to [3], wherein the first agent further comprises the organic polymer having a hydrolyzable silyl group.
[5] The curable battery adhesive according to any one of [1] to [4], wherein the second agent further comprises water.
[6] The curable battery adhesive according to any one of [3] to [5], wherein a content of the metal hydroxide in the curable battery adhesive composition is 10 to 80% by volume.
[7] The curable battery adhesive according to any one of [3] to [6], wherein the metal hydroxide is aluminum hydroxide.
[8] The curable battery adhesive according to any one of [3] to [7], wherein the metal hydroxide is surface-untreated aluminum hydroxide.
[9] The curable battery adhesive according to any one of [1] to [8], wherein the thermally conductive filler comprises

small-particle aluminum hydroxide having an average particle size of 20 μm or less.

[10] The curable battery adhesive according to any one of [1] to [9], wherein the organic polymer having a hydrolyzable silyl group is a polyalkylene oxide having a hydrolyzable silyl group.

[11] The curable battery adhesive according to any one of [1] to [10], wherein the organic polymer having a hydrolyzable silyl group has the hydrolyzable silyl group at a terminal of a linear main chain.

[12] The curable battery adhesive according to any one of [1] to [11], wherein the organic polymer having a hydrolyzable silyl group has a number average molecular weight (Mn) of 1000 to 40000.

[13] The curable battery adhesive according to any one of [1] to [12], wherein at least one of the first agent or the second agent further comprises a plasticizer.

[14] The curable battery adhesive according to any one of [1] to [13], wherein

the first agent has a viscosity η1 (25°C, shear rate 1 (1/sec)) of 100 to 1000 Pa·s,
the second agent has a viscosity η2 (25°C, shear rate 1 (1/sec)) of 100 to 1000 Pa·s, and
an absolute value of difference between the viscosity η1 and the viscosity η2 is 400 Pa·s or less.

[15] A battery structure comprising a structural body and a plurality of cells disposed in the structural body,

an adhesive layer being disposed at least one of between the structural body and a cell or between the plurality of cells,
the adhesive layer being a cured product of a curable battery adhesive composition comprising an organic polymer having a hydrolyzable silyl group and a thermally conductive filler,
the cured product having a shear adhesive strength of 0.5 to 2.5 MPa in a tensile shear test,
the cured product when having a thickness of 2 mm having an elongation under maximum stress of 0.3 mm or more in the tensile shear test, and
the cured product having a thermal conductivity of 1.5 W/m·K or more.

[16] Use of the curable battery adhesive according to any one of [1] to [13] as at least one of a gap filler between battery cells, a gap filler between a battery cell and a module housing, a gap filler between a battery module and a battery pack housing, or a gap filler between a battery cell and a battery pack housing.

Advantageous Effects of Invention

The present invention can provide a curable battery adhesive having "suitable adhesion" that allows components of a battery structure to be secured with appropriate adhesion and thus maintain a certain level of strength while allowing the components to be easily removed, and having a high thermal conductivity and, moreover, as excellent conformability to the expansion and contraction of battery cells.

Brief Description of Drawings

[Fig. 1] Fig. 1 is a schematic diagram showing a container set according to one embodiment.
[Fig. 2] Fig. 2 is a schematic diagram showing a container set according to one embodiment.
[Fig. 3] Fig. 3 is a cross-sectional diagram schematically showing a battery structure according to one embodiment of the present invention.
[Fig. 4] Fig. 4 is a perspective diagram showing a representative configuration of a battery cell.
[Fig. 5] Fig. 5 is a cross-sectional diagram schematically showing a battery structure according to another embodiment of the present invention.
[Fig. 6] Fig. 6 is a cross-sectional diagram schematically showing a battery structure according to another embodiment of the present invention.
[Fig. 7] Fig. 7 is a cross-sectional diagram schematically showing a battery structure according to another embodiment of the present invention.

Description of Embodiments

[Curable battery adhesive]

The curable battery adhesive of the present invention is composed of a first agent containing a silanol

condensation catalyst and a thermally conductive filler and provided in a first container, and a second agent containing an organic polymer having a hydrolyzable silyl group and a thermally conductive filler and provided in a second container.

A cured product obtained by curing in an environment having 25°C and 50% RH for 2 weeks a curable battery adhesive composition obtained by mixing the first agent and the second agent has a shear adhesive strength of 0.5 to 2.5 MPa in a tensile shear test, the cured product when having a thickness of 2 mm has an elongation under maximum stress of 0.3 mm or more in the tensile shear test, and the cured product has a thermal conductivity of 1.5 W/m·K or more.

Concerning the curable battery adhesive of the present invention, the first agent provided in the first container and the second agent provided in the second container are stored separately. By separately storing the first agent and the second agent, the organic polymer having a hydrolyzable silyl group can be prevented from polymerizing and curing during storage, and storage stability is increased. When using the curable battery adhesive, the first agent and the second agent are mixed to form a curable battery adhesive composition containing an organic polymer having a hydrolyzable silyl group, a thermally conductive filler, and a silanol condensation catalyst, and the composition is then cured and used as a cured product.

<Shear adhesive strength>

Concerning the curable battery adhesive of the present invention, a cured product obtained by curing in an environment having 25°C and 50% RH for 2 weeks the curable battery adhesive composition obtained by mixing the first agent and the second agent has a shear adhesive strength of 0.5 to 2.5 MPa. RH means relative humidity.

When the shear adhesive strength is less than 0.5 MPa, it is difficult for the cured product formed of the curable battery adhesive to secure the components of a battery structure with appropriate adhesion. On the other hand, when the shear adhesive strength exceeds 2.5 MPa, the removability of the cured product formed of the curable battery adhesive from various components is impaired, making recycling and the like difficult.

The shear adhesive strength of the cured product is preferably 0.6 to 1.8 MPa, and more preferably 0.8 to 1.4 MPa.

In the present invention, the shear adhesive strength can be regulated to the desired range by, for example, the kind of the organic polymer having a hydrolyzable silyl group and the kind and amount of the thermally conductive filler used. Even when a large amount of thermally conductive filler is packed to provide a high thermal conductivity, a certain level of shear adhesive strength is readily ensured by using a thermally conductive filler having a hydroxyl group on the surface as will be described below.

The shear adhesive strength is measured by a tensile shear test and, specifically, it is a tensile shear strength measured from a cured product (a test piece) having a thickness of 2 mm obtained by applying the curable battery adhesive composition between two substrates and curing the composition in an environment having 23°C and 50% RH for 2 weeks. That is to say, the shear adhesive strength is the maximum stress of a stress curve measured until the cured product serving as a bonded joint breaks due to the load (shear stress) acting to displace the substrates in opposite directions.

The material of the substrates is a cold-rolled steel plate (SPCC) that is cationically electrodeposition-coated. Details of the method for measuring the shear adhesive strength are as described in the Examples.

<Elongation under maximum stress>

Concerning the curable battery adhesive of the present invention, a cured product obtained by curing in an environment having 25°C and 50% RH for 2 weeks the curable battery adhesive composition obtained by mixing the first agent and the second agent has an elongation under maximum stress of 0.3 mm or more in a tensile shear test.

The cured product if having an elongation under maximum stress of less than 0.3 mm has poor conformability to the expansion and contraction of battery cells. As a result, the cured product likely peels from battery cells, resulting in poor heat dissipating properties and making rapid-charging difficult.

From the viewpoint of enhancing conformability, the elongation under maximum stress of the cured product is preferably 0.4 mm or more, and more preferably 0.5 mm or more. The upper limit of the elongation under maximum stress of the cured product is not particularly limited and is, for example, 3 mm.

In the present invention, the elongation under maximum stress can be regulated to the desired range by, for example, the kind of the organic polymer having a hydrolyzable silyl group and the kind and amount of the thermally conductive filler used. As will be described below, the elongation under maximum stress can be readily regulated to the desired range by regulating the total surface area of the metal hydroxide per 100 g of the organic polymer having a hydrolyzable silyl group to a predetermined range.

Concerning the elongation under maximum stress, the same test as the method described in connection with the shear adhesive strength described above (a tensile shear strength test) is performed on a cured product having a thickness of 2 mm, and the displacement when the tensile stress shows the largest value (the maximum value) is regarded as the elongation under maximum stress. Displacement means the amount of deformation (length: mm) in the longitudinal

direction of a sample from the beginning of measurement until the tensile stress shows the largest value (the maximum value).

<Thermal conductivity>

Concerning the curable battery adhesive of the present invention, a cured product obtained by curing in an environment having 25°C and 50% RH for 2 weeks the curable battery adhesive composition obtained by mixing the first agent and the second agent has a thermal conductivity of 1.5 W/m·K or more. When the thermal conductivity is less than 1.5 W/m·K, heat produced by battery cells unlikely dissipates, thus making rapid-charging difficult.
The thermal conductivity is preferably 2 W/m·K or more, and more preferably 2.5 W/m·K or more. While a higher thermal conductivity is more preferable, the higher limit is practically, for example, 5 W/m·K or less.
By simultaneously achieving the above elongation under maximum stress and thermal conductivity, heat dissipation during rapid charging is enhanced, resulting in a curable battery adhesive suitable for rapid charging.
Thermal conductivity is measured in accordance with ASTM D5470.

<Organic polymer having hydrolyzable silyl group>

The second agent of the curable battery adhesive, and the curable battery adhesive composition obtained by mixing the first agent and the second agent, of the present invention contain an organic polymer having a hydrolyzable silyl group. Also, the first agent preferably contains an organic polymer having a hydrolyzable silyl group. When the organic polymer having a hydrolyzable silyl group is also contained in the first agent, the formulations of the first agent and the second agent are similar, so the difference between the viscosities of the two agents is reduced, the formulations readily become uniform during blending, and handleability is improved as well.
The hydrolyzable silyl group contained in the organic polymer can be hydrolyzed by water such as moisture to form silanol groups, and then silanol groups can undergo condensation polymerization with each other or with the hydrolyzable silyl group to form a siloxane bond. Accordingly, the organic polymer forms a crosslinked structure and cures, and thereby a rubber-like elastic body is obtained. The silanol group means a hydroxy group directly bonded to a silicon atom (Si-OH).
The hydrolyzable silyl group is a group in which 1 to 3 hydrolyzable groups are bonded to a silicon atom. The hydrolyzable group of the hydrolyzable silyl group is not particularly limited, and examples include a hydrogen atom, a halogen atom, an alkoxy group, an acyloxy group, a ketoximate group, an amino group, an amide group, an acid amide group, an aminooxy group, a mercapto group, and an alkenyloxy group.
In particular, the hydrolyzable silyl group is preferably an alkoxysilyl group because of its moderate hydrolysis reaction. Examples of the alkoxysilyl group include trialkoxysilyl groups such as a trimethoxysilyl group, a triethoxysilyl group, a triisopropoxysilyl group, and a triphenoxysilyl group; dialkoxysilyl groups such as a dimethoxymethylsilyl group and a diethoxymethylsilyl group; and monoalkoxysilyl groups such as a methoxydimethylsilyl group and an ethoxydimethylsilyl group. In particular, a dialkoxysilyl group is more preferable, and a dimethoxymethylsilyl group is particularly preferable.
The main chain of the organic polymer having a hydrolyzable silyl group may be linear or branched, and is preferably linear. That is to say, the organic polymer having a hydrolyzable silyl group of the present invention preferably has a hydrolyzable silyl group at the terminal of the linear main chain.
When the organic polymer having a hydrolyzable silyl group at the terminal is used, the cured product readily stretches, and thus conformability is enhanced.
The terminal silylation rate of the organic polymer having a hydrolyzable silyl group is preferably 70% or more, more preferably 80% or more, and even more preferably 90% or more. When the terminal silylation rate is at a certain level or higher, it is easier to suitably regulate the curability and the stretchability of the curable battery adhesive. The terminal silylation rate means the ratio of silylated terminals to all terminals of the organic polymer having a hydrolyzable silyl group.
The terminal silylation rate is not particularly limited, is, for example, 100% or less, and can practically be 99% or less.
The terminal silylation rate of the organic polymer having a hydrolyzable silyl group can be determined by $^1H$-NMR.
The average number of hydrolyzable silyl groups per molecule of the organic polymer having a hydrolyzable silyl group is preferably 1 to 3. When the number of hydrolyzable silyl groups in the polymer is within this range, the curability and the stretchability of the curable battery adhesive are favorable.
The average number of hydrolyzable silyl groups per molecule of the organic polymer having a hydrolyzable silyl group can be calculated based on the concentration of hydrolyzable silyl groups in the organic polymer determined by $^1H$-NMR and the number average molecular weight of the polymer determined by GPC.
The method for introducing a hydrolyzable silyl group into an organic polymer is not particularly limited, and

examples include (1) a method in which hydrosilane having a hydrolyzable silyl group is caused to act on, and thus hydrosilylate, an organic polymer modified with an unsaturated group within the molecule, (2) a method in which a compound having a mercapto group and a hydrolyzable silyl group is reacted with an organic polymer modified with an unsaturated group within the molecule, and (3) a method in which an organic polymer having a functional group within the molecule is reacted with a compound having a hydrolyzable silyl group and a functional group reactive to the aforementioned functional group. Specifically, a reaction between an isocyanate group and a hydroxyl group, a reaction between an isocyanate group and an amino group, a reaction between an isocyanate group and a mercapto group, or the like can be used.

The organic polymer of the organic polymer having a hydrolyzable silyl group is not particularly limited, and examples include polyalkylene oxides such as polyethylene oxide, polypropylene oxide, polybutylene oxide, polytetramethylene oxide, polyethylene oxide-polypropylene oxide copolymers, and polypropylene oxide-polybutylene oxide copolymers; saturated hydrocarbon-based polymers; polyurethane; polychloroprene; polyisoprene; copolymers of isoprene or butadiene with acrylonitrile and/or styrene; polybutadiene; copolymers of isoprene or butadiene with acrylonitrile and styrene; (meth)acrylate-based polymers obtained by radical polymerization of monomers such as ethyl (meth) acrylate and butyl (meth)acrylate; vinyl-based polymers obtained by radical polymerization of monomers such as vinyl acetate, acrylonitrile, and styrene; graft polymers obtained by polymerizing a vinyl monomer in the above polymers; polysulfide-based polymers; polyamide-based polymers such as nylon 6 obtained by ring-opening polymerization of ε-caprolactam, nylon 6,6 obtained by condensation polymerization of hexamethylenediamine and adipic acid, nylon 6,10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylons having two or more such nylons; polycarbonate-based polymers produced by condensation polymerization of bisphenol A and carbonyl chloride; and diallyl phthalate-based polymers. Herein, (meth)acrylate means methacrylate or acrylate.

Among these organic polymers, polyalkylene oxide is preferable from the viewpoint of regulating the shear adhesive strength and the elongation under maximum stress after curing to the desired ranges. That is to say, the organic polymer having a hydrolyzable silyl group is preferably a polyalkylene oxide having a hydrolyzable silyl group. In particular, the polyalkylene oxide is especially preferably polypropylene oxide.

The number average molecular weight (Mn) of the organic polymer having a hydrolyzable silyl group is preferably 1000 to 70000, more preferably 1000 to 40000, even more preferably 1500 to 30000, even more preferably 2000 to 30000, even more preferably 4000 to 30000, and even more preferably 4000 to 20000. When the number average molecular weight of the organic polymer having a hydrolyzable silyl group is equal to or lower than these upper limits, the viscosity of the resulting curable battery adhesive composition is lowered, and the coatability of the curable battery adhesive composition is enhanced. When the number average molecular weight of the organic polymer having a hydrolyzable silyl group is equal to or greater than these lower limits, a cured product of the curable battery adhesive unlikely becomes brittle, and the hardness and the stretchability of the cured product are enhanced. When the adhesive composition contains multiple kinds of organic polymers having a hydrolyzable silyl group, the number average molecular weight (Mn) means the overall number average molecular weight (Mn) of the organic polymers.

Herein, the number average molecular weight of the organic polymer having a hydrolyzable silyl group means a value in terms of polystyrene measured by GPC (gel permeation chromatography). In the measurement by GPC, for example, "ACQUITY APC system" manufactured by Waters and Shodex KF604 manufactured by Tosoh Corporation as a GPC column can be used, and measurement can be performed using tetrahydrofuran as a solvent at a column temperature of 40°C at a flow rate of 0.3 ml/min.

The polymer having a hydrolyzable silyl group may be a commercially available product. Examples of polyalkylene oxide-based polymers in which polypropylene oxide is the main chain skeleton, and a dimethoxysilyl group is at the terminal of the main chain skeleton, include those having product names "Exestar A2410" and "Exestar S4530" manufactured by Asahi Glass Co., Ltd., and product names "S203", "S327", "SAT350", "SAX010", and "SAX220", manufactured by Kaneka Corporation.

<Thermally conductive filler>

The first agent and the second agent of the curable battery adhesive, and the curable battery adhesive composition obtained by mixing the first agent and the second agent, of the present invention contain a thermally conductive filler.

The content of the thermally conductive filler in the curable battery adhesive composition is preferably 60 to 85% by volume, more preferably 65 to 80% by volume, and even more preferably 70 to 80% by volume. The content of the thermally conductive filler in each of the first agent and the second agent is preferably within such a range.

When the content of the thermally conductive filler is equal to or greater than these lower limits, the thermal conductivity of the cured product is increased, and heat dissipating properties are enhanced. On the other hand, when the

content of the thermally conductive filler is equal to or lower than these upper limits, the stretchability of the cured product is increased, and conformability to the expansion and contraction of battery cells is likely enhanced.

The thermally conductive filler preferably contains a thermally conductive filler having a hydroxyl group on the surface. The use of a thermally conductive filler having a hydroxyl group on the surface facilitates the reaction between the organic polymer having a hydrolyzable silyl group and the thermally conductive filler, the interfacial strength between the organic polymer and the thermally conductive filler is increased, and, as a result, the stretchability of the cured product is enhanced.

Examples of the thermally conductive filler having a hydroxyl group on the surface include metal oxide and metal hydroxide.

Examples of the metal oxide include aluminum oxide as represented by alumina, magnesium oxide and zinc oxide, and aluminum oxide is particularly preferable. Examples of the metal hydroxide include aluminum hydroxide, magnesium hydroxide and zinc hydroxide, and aluminum hydroxide is particularly preferable.

Preferably, neither the metal oxide nor the metal hydroxide is surface-treated. Surface-treated metal oxide and metal hydroxide have fewer surface hydroxyl groups, and unlikely react with the organic polymer. Accordingly, the metal oxide is preferably surface-untreated aluminum oxide, and the metal hydroxide is preferably surface-untreated aluminum hydroxide. Note that the present invention does not exclude the use of a surface-treated thermally conductive filler. Surface treatment is carried out by, for example, reacting the surface of the thermally conductive filler with a surface treatment agent such as a silane coupling agent.

The content of the thermally conductive filler having a hydroxyl group on the surface relative to the total amount of thermally conductive filler in the curable battery adhesive composition is preferably 50% by mass or more, more preferably 80% by mass or more, even more preferably 95% by mass or more, and even more preferably 100% by mass. Also, the content of the thermally conductive filler having a hydroxyl group relative to the total amount of thermally conductive filler in each of the first agent and the second agent is preferably within such a range.

From the viewpoint of increasing the shear adhesive strength and the elongation under maximum stress of the cured product, the thermally conductive filler preferably contains a metal hydroxide among the above thermally conductive fillers having a hydroxyl group.

In the curable battery adhesive composition, the total surface area of the metal hydroxide per 100 g of the organic polymer having a hydrolyzable silyl group is preferably 200 to 1500 $m^2$. When the total surface area of the metal hydroxide is 200 to 1500 $m^2$, the shear adhesive strength and the elongation under maximum stress of the cured product are likely increased. The total surface area of the metal hydroxide is preferably 300 to 1200 $m^2$, and more preferably 500 to 1000 $m^2$. In each of the first agent and the second agent, the total surface area of the metal hydroxide per 100 g of the organic polymer having a hydrolyzable silyl group is also preferably within such a range.

The total surface area of the metal hydroxide per 100 g of the organic polymer having a hydrolyzable silyl group can be determined by the method described in the Examples.

The thermally conductive filler preferably contains small-particle aluminum hydroxide having an average particle size of 20 $\mu$m or less. By containing small-particle aluminum hydroxide having an average particle size of 20 $\mu$m or less, the total surface area of the metal hydroxide is readily regulated to the above range, and the stretchability of the cured product readily enhanced. The average particle size of small-particle aluminum hydroxide is preferably 15 $\mu$m or less and more preferably 10 $\mu$m or less, and is preferably 0.5 $\mu$m or more, more preferably 1 $\mu$m or more, and even more preferably 5 $\mu$m or more. Two or more kinds of small-particle aluminum hydroxide having different average particle sizes may be used in combination.

Herein, the average particle size is a median diameter (D50) measured using a laser diffraction/scattering particle size distribution analyzer.

The thermally conductive filler may contain large-particle aluminum hydroxide having an average particle size exceeding 20 $\mu$m.

The proportion (% by volume) of the content of small-particle aluminum hydroxide relative to the total amount of aluminum hydroxide in the curable battery adhesive composition is preferably 10 to 100% by volume, and more preferably 25 to 100% by volume. The proportion (% by volume) of the content of small-particle aluminum hydroxide relative to the total amount of aluminum hydroxide in each of the first agent and the second agent is preferably within such a range.

From the viewpoint of increasing the shear adhesive strength and the elongation under maximum stress of the cured product, the content of the metal hydroxide in the curable battery adhesive composition is preferably 10 to 80% by volume, and more preferably 15 to 75% by volume. The content of the metal hydroxide in each of the first agent and the second agent is preferably within such a range.

From the viewpoint of enhancing the thermal conductivity of the cured product, the thermally conductive filler preferably contains aluminum oxide. More preferably, the thermally conductive filler contains both the above aluminum hydroxide and aluminum oxide. Accordingly, the total surface area of the metal hydroxide per 100 g of the organic polymer having a hydrolyzable silyl group is readily regulated to the above range, and the thermal conductivity, adhesive strength, and stretchability of the cured product are readily enhanced in a well-balanced manner.

When the curable battery adhesive composition contains aluminum oxide, the content thereof is preferably 10 to 70% by volume, and more preferably 20 to 60% by volume. The content of aluminum oxide when the first agent and the second agent each contain aluminum oxide is also preferably within such a range.
The average particle size of aluminum oxide is not particularly limited, and is, for example, 0.1 to 200 μm, preferably 0.5 to 150 μm, and more preferably 1 to 100 μm. Aluminum oxide having different average particle sizes may be used in combination.

<Plasticizer>

At least one of the first agent or the second agent in the curable battery adhesive of the present invention, and the curable adhesive composition obtained by mixing the first agent and the second agent, preferably contain a plasticizer. Due to the plasticizer contained, the stretchability of the adhesive is readily enhanced and, also, the viscosity is readily lowered, thus enhancing workability and the like.
Specific examples of the plasticizer include organic ester plasticizers such as monobasic organic acid esters and polybasic organic acid esters, organic phosphoric acid plasticizers such as organic phosphoric acid plasticizers and organic phosphorous acid plasticizers, sulfonamides, and epoxy-based plasticizers such as epoxidized soybean oil. The plasticizer is preferably an organic ester plasticizer.
Examples of the monobasic organic acid esters include glycol esters obtained by reacting glycols with monobasic organic acids. Examples of the glycols include triethylene glycol, tetraethylene glycol, and tripropylene glycol. Examples of the monobasic organic acids include butyric acid, isobutyric acid, caproic acid, 2-ethylbutyric acid, heptyl acid, n-octylic acid, 2-ethylhexanoic acid, n-nonylic acid, decylic acid, and benzoic acid.
Examples of the polybasic organic acid esters include ester compounds of polybasic organic acids and alcohols having a linear or branched structure with 4 to 8 carbon atoms. Examples of the polybasic organic acids include adipic acid, sebacic acid, and azelaic acid.
Examples of the organic ester plasticizers include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of a phosphoric acid ester and an adipic acid ester. Other organic ester plasticizers may be used as well. Adipic acid esters other than the above adipic acid esters may be used as well.
Examples of the organic phosphorous acid plasticizers include tributoxyethyl phosphate, isodecylphenyl phosphate, and triisopropyl phosphate.
The plasticizer is preferably a diester plasticizer represented by the following formula (1) or formula (2):

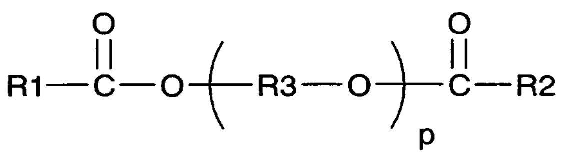

•••(1)

wherein R1 and R2 each represent an organic group having 2 to 10 carbon atoms, R3 represents an ethylene group, an isopropylene group, or a n-propylene group, and p represents an integer of 3 to 10. R1 and R2 in formula (1) are each preferably an organic group having 5 to 10 carbon atoms, and more preferably an organic group having 6 to 10 carbon atoms.

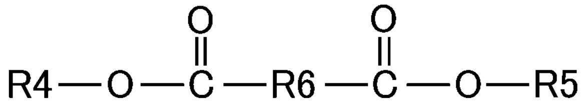

···(2)

R4 and R5 in formula (2) each represent a hydrocarbon group having 3 to 10 carbon atoms, and R6 represents a hydrocarbon group having 2 to 10 carbon atoms. R4 and R5 in formula (2) each preferably have 4 to 9 carbon atoms, and more preferably have 6 to 9 carbon atoms. The hydrocarbon groups of R4 and R5 are each preferably an alkyl group. The alkyl group may be linear or branched. R6 preferably has 4 to 9 carbon atoms, and more preferably has 5 to 8 carbon atoms. The hydrocarbon group of R6 is preferably an aliphatic hydrocarbon group and, in particular, more preferably an

unsaturated aliphatic hydrocarbon group. R6 may be linear or may have a branched or cyclic structure, and preferably has a cyclic structure.

The plasticizer preferably contains triethylene glycol di-2-ethylhexanoate (3GO), diisononyl 1,2-cyclohexanedicarboxylate (DINCH), triethylene glycol di-2-ethylbutyrate (3GH), or triethylene glycol di-2-ethylpropanoate. The plasticizer more preferably contains triethylene glycol di-2-ethylhexanoate (3GO), triethylene glycol di-2-ethylbutyrate (3GH), or 1,2-cyclohexane dicarboxylic acid diisononyl ester (DINCH), and even more preferably contains triethylene glycol di-2-ethylhexanoate or 1,2-cyclohexane dicarboxylic acid diisononyl ester.

From the viewpoint of lowering the viscosity of the first agent, the second agent, and the composition obtained by mixing them, the molecular weight of the plasticizer is preferably less than 1000 and more preferably less than 500, and is preferably 50 or more and more preferably 100 or more. Moreover, the molecular weight of the plasticizer is preferably 50 or more and less than 1000, and more preferably 100 or more and less than 500. The molecular weight of the plasticizer, when the structural formula is known, is calculated from the structural formula, and when the structural formula is unknown, can be measured using a mass spectrometer (GC-MS or LC-MS).

The content of the plasticizer in the curable battery adhesive composition is preferably 10 to 200 parts by mass and more preferably 100 to 160 parts by mass based on 100 parts by mass of the organic polymer having a hydrolyzable silyl group. When the amount of the plasticizer is at these lower limits or above, the viscosity of the composition is lowered, thus enhancing workability. When the amount of the plasticizer is equal to or less than these upper limits, the amount of the organic polymer can be at a certain level or higher, thus enabling a certain number of points of reaction with the thermally conductive filler to be ensured, and shear adhesive strength is likely increased.

The plasticizer content in each of the first and second agents is also preferably within the above ranges.

<Silanol condensation catalyst>

The first agent of the curable battery adhesive, and the curable battery adhesive composition obtained by mixing the first agent and the second agent, of the present invention preferably contain a silanol condensation catalyst. Preferably, the second agent does not contain a silanol condensation catalyst. This is because, as will be described below, water is suitably contained in the second agent and, in this case, if the silanol condensation catalyst is contained in the second agent, the organic polymer having a hydrolyzable silyl group undergoes a condensation reaction during storage, and storage stability is impaired.

Examples of the silanol condensation catalyst include organotin-based compounds such as dibutyltin dilaurate, dibutyltin oxide, dibutyltin diacetate, dibutyltin phthalate, bis(dibutyltin laurate) oxide, dibutyltin bis(acetylacetonate), dibutyltin bis(monoester malate), stannous octoate, dibutyltin octoate, dioctyltin oxide, dioctyltin diversatate, dioctyltin distearate, dibutyltin bis(triethoxysilicate), bis(dibutyltin bistriethoxysilicate) oxide, dibutyltin oxybisethoxysilicate, and 1,1,3,3-tetrabutyl-1,3-dilauryloxycarbonyl-distannoxane; and organotitanium-based compounds such as tetra-n-butoxytitanate and tetraisopropoxytitanate. One of these silanol condensation catalysts may be used singly, or two or more may be used in combination. Among the above silanol condensation catalysts, organotin-based compounds are preferable and, in particular, dibutyltin dilaurate is more preferable.

The content of the silanol condensation catalyst in the curable battery adhesive composition is preferably 1 to 10 parts by mass and more preferably 1 to 5 parts by mass based on 100 parts by mass of the organic polymer having a hydrolyzable silyl group. The content of the silanol condensation catalyst in the first agent is also preferably within such a range.

When the content of the silanol condensation catalyst is at these lower limits or above, the curing rate can be increased, and when the content of the silanol condensation catalyst is at these upper limits or below, deterioration of the storage stability of the composition can be suppressed.

<Adhesion promoter>

The first agent of the curable battery adhesive, and the curable battery adhesive composition obtained by mixing the first agent and the second agent, of the present invention preferably contain an adhesion promoter. From the viewpoint of storage stability, the second agent preferably does not contain an adhesion promoter.

Due to the adhesion promoter, the adhesion of the cured product of the curable battery adhesive composition can be further enhanced.

The adhesion promoter is preferably an aminosilane coupling agent. Specific examples of the aminosilane coupling agent include 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine. In particular, N-(2-aminoethyl)-3-aminopropyltrimethoxysilane is

preferable.

The content of the adhesion promoter in the curable battery adhesive composition is preferably 1 to 10 parts by mass and more preferably 1 to 5 parts by mass based on 100 parts by mass of the organic polymer having a hydrolyzable silyl group. The content of the silanol adhesion promoter in the first agent is also preferably within such a range.

When the content of the adhesion promoter is at these lower limits or above, the adhesion of the cured product formed is likely enhanced, and when the content of the adhesion promoter is at these upper limits or below, the cured product formed can be prevented from being brittle and, accordingly, deterioration of adhesive strength can be suppressed.

<Water>

The second agent, and the curable battery adhesive composition obtained by mixing the first agent and the second agent, preferably contain water. This is preferable because the curable battery adhesive composition can be promptly cured to the inside of the composition after being prepared by mixing the first agent and the second agent.

The content of water in the second agent is preferably 0.1 to 20 parts by mass, more preferably 0.5 to 15 parts by mass, and even more preferably 1 to 10 parts by mass, based on 100 parts by mass of the organic polymer having a hydrolyzable silyl group contained in the curable battery adhesive composition obtained by mixing the first agent and the second agent.

Similarly, the content of water in the curable battery adhesive composition is preferably 0.1 to 20 parts by mass, more preferably 0.5 to 15 parts by mass, and even more preferably 1 to 10 parts by mass, based on 100 parts by mass of the organic polymer having a hydrolyzable silyl group.

<Dehydrating agent>

The first agent, and the curable battery adhesive composition obtained by mixing the first agent and second agent, preferably contain a dehydrating agent. Due to the dehydrating agent contained, the first agent can be prevented from being cured by moisture contained in air or the like during storage.

Examples of the dehydrating agent include silane compounds such as vinyltrimethoxysilane, dimethyldimethoxysilane, tetraethoxysilane, methyltrimethoxysilane, methyltriethoxysilane, tetramethoxysilane, phenyltrimethoxysilane, and diphenyldimethoxysilane; and ester compounds such as methyl orthoformate, ethyl orthoformate, methyl orthoacetate, and ethyl orthoacetate. One of these dehydrating agents may be used singly, or two or more may be used in combination. In particular, vinyltrimethoxysilane is preferable.

The content of the dehydrating agent in the first agent is preferably 0.5 to 20 parts by mass and more preferably 1 to 10 parts by mass based on 100 parts by mass of the organic polymer having a hydrolyzable silyl group contained in the curable battery adhesive composition obtained by mixing the first agent and the second agent. When the content of the dehydrating agent is at these lower limits or above, curing during storage is readily suppressed, and when the content of the dehydrating agent is at these upper limits or below, deterioration of curability resulting from the dehydrating agent can barely occur.

Similarly, the content of the dehydrating agent in the curable battery adhesive composition is preferably 0.5 to 20 parts by mass and more preferably 1 to 10 parts by mass based on 100 parts by mass of the organic polymer having a hydrolyzable silyl group.

<Dispersant>

At least one of the first agent or the second agent in the curable battery adhesive, and the curable battery adhesive composition obtained by mixing the first agent and the second agent, of the present invention preferably contain a dispersant. Due to the dispersant contained, the viscosity is readily lowered, thus enhancing workability and the like.

The dispersant may be a polymer-based dispersant. The polymer-based dispersant may be a polymer compound having a functional group. Examples of the polymer compound include acryl-based, vinyl-based, polyester-based, polyurethane-based, polyether-based, epoxy-based, polystyrene-based, amino-based, and silicone-based compounds. Examples of the functional group include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. Also, a dispersant other than a polymer dispersant may be used and, for example, an alkoxysilane compound may be used.

The content of the dispersant in the curable battery adhesive composition is preferably 0.1 to 20 parts by mass and more preferably 0.5 to 15 parts by mass based on 100 parts by mass of the organic polymer having a hydrolyzable silyl group. The content of the dispersant in each of the first agent and the second agent is preferably within such a range.

<Others>

The first agent and the second agent, as well as the curable battery adhesive composition obtained by mixing them, in the present invention may contain other additives such as thixotropy imparting agents, antioxidants, ultraviolet absorbers, pigments, dyes, antisettling agents, and solvents.

<Mass ratio and viscosity of first agent and second agent>

The mass ratio of the first agent to the second agent (second agent/first agent) is preferably 1 or a value close to 1, and, specifically, preferably 0.9 to 1.1, more preferably 0.95 to 1.05. Thus, regulating the mass ratio of the first agent to the second agent to 1 or a value close to 1 facilitates the preparation of the mixture of the first agent and the second agent.

Viscosity η1 of the first agent at 25°C at shear rate 1 (1/sec) is preferably 100 to 1000 Pa·s, and more preferably 130 to 980 Pa·s. Viscosity η2 of the second agent at 25°C at shear rate 1 (1/sec) is preferably 100 to 1000 Pa·s, and more preferably 130 to 980 Pa·s. Viscosities of the first agent and the second agent within the above ranges each provide good handleability.

Moreover, the absolute value of the difference between viscosity η1 and viscosity η2 is preferably 400 Pa·s or less, more preferably 300 Pa·s or less, and even more preferably 200 Pa·s or less. When the difference between viscosity η1 and viscosity η2 is small in this way, the first agent and the second agent are easily mixed, and a highly uniform composition is readily obtained. The lower limit of the absolute value of the difference between viscosity η1 and viscosity η2 is 0 Pa·s.

The above viscosities η1 and η2 are measured using a rheometer, and details are as described in the Examples.

The first agent and the second agent are provided in separate containers, and specifically the first agent is provided in a first container, and the second agent is provided in a second container. The first container and the second container may be separate bodies, or may be integrated into a single body. Integrating the first container and the second container into a single body facilitate the supplying of the first container and the second container as a container set to the demand destination. Herein, the first container filled with the first agent and the second container filled with the second agent may be collectively referred to as a container set.

Examples of containers include, but are not limited to, syringes, cartridges, pails, and drums. For example, when filling a syringe with the adhesive, the syringe is preferably a dual barrel syringe. A dual barrel syringe 30 has a first syringe 31 constituting a first container and a second syringe 32 constituting a second container that are parallelly integrated into a single body as shown in Fig. 1. A first agent 35 and a second agent 36 respectively provided in the syringes 31, 32 may be discharged from the syringes that serve as dispensers and mixed.

When using a cartridge, the container set may be composed of a first cartridge constituting the first container and a second cartridge constituting the second container, and such cartridges may be integrated into a single body. The cartridges may be usually attached to syringes (e.g., a first syringe and a second syringe) or the like, and the first agent delivered from the first cartridge and the second agent delivered from the second cartridge may be discharged from the respective outlets of the first syringe and the second syringe that serve as dispensers and mixed.

The first agent and the second agent may be mixed using a mixing apparatus such as a static mixer. For example, as shown in Fig. 1, a static mixer 38 is connected to an outlet 31A of a first syringe 31 and an outlet 32A of a second syringe 32, and is capable of mixing inside the mixer 38 a first agent 35 and a second agent 36 respectively discharged from the outlets 31A, 32A. The mixture (curable composition) obtained by being mixed in the mixer 38 may be discharged from an outlet 39 of the mixer 38.

The syringes 31, 32 may each have a structure in which the openings of barrels 33A, 34A respectively filled with the first agent 35 and the second agent 36 are closed by lids 33B, 34B. Concerning the syringe 30 shown in Fig. 1, the first agent 35 and the second agent 36 after the lids 33B, 34B are removed may be respectively discharged from the outlets 31A, 32A by being pushed by plungers (not shown) inserted through the openings.

When using pail cans, the container set may include a first pail can 41 that constitutes the first container and is filled with a first agent 45 and a second pail can 42 that constitutes the second container and is filled with a second agent 46 as shown in Fig. 2. For example, the pail cans 41, 42 respectively include container bodies 43A, 44A that are filled with the first agent 45 and the second agent 46, respectively, and have openings, and lids 43B, 44B for closing the openings of the container bodies 43A, 44A, respectively.

[Battery structure]

The battery structure of the present invention includes a structural body and a plurality of cells disposed in the structural body, wherein an adhesive layer is disposed at least one of between the structural body and a cell or between the plurality of cells. The adhesive layer is a cured product of a curable battery adhesive composition including an organic polymer having a hydrolyzable silyl group and a thermally conductive filler, the cured product has a shear adhesive

strength of 0.5 to 2.5 MPa, the cured product when having a thickness of 2 mm has an elongation under maximum stress of 0.3 mm or more, and the cured product has a thermal conductivity of 1.5 W/m·K or more.

The cured product that constitutes the adhesive layer in the battery structure is the curable battery adhesive composition described above.

The components of the curable battery adhesive composition are as described above.

The shear adhesive strength, the elongation under maximum stress, and the thermal conductivity of the cured product of the curable battery adhesive composition are also as described above.

The structural body includes a variety of components that form the battery structure, such as a substrate for connecting the cells, a battery pack case, a battery module case, a cooling plate, and a water-cooling plate.

The cured product of the curable battery adhesive or the curable battery adhesive composition of the present invention can be used as at least one of a gap filler between battery cells, a gap filler between a battery cell and a module housing, a gap filler between a battery module and a battery pack housing, or a gap filler between a battery cell and a battery pack housing.

Below, a specific example of the battery structure of the present invention will now be described.

Fig. 3 shows a battery structure (a battery module) 10 including a battery module case (housing) 11 and a plurality of cells 12 disposed in the case 11. The cells 12 are disposed such that their flat surfaces face each other. An adhesive layer 13, which is the cured product of the curable battery adhesive composition, is securely disposed in a space A between the plurality of cells 12.

The cell 12 is a constituent unit of a lithium-ion secondary battery or the like, and is generally composed of an exterior film and battery elements (not shown) enclosed within the exterior film. Examples of the battery elements include a positive electrode, a negative electrode, a separator, and an electrolyte. The cell 12 as shown in Fig. 4 is a flat body that has a small thickness in relation to the width, and is formed such that a positive electrode 12a and a negative electrode 12b are exposed outside, and a flat surface 12c is thicker than a crimped edge 12d.

While a laminate cell having an exterior film is depicted as the cell 12, a prismatic cell or a cylindrical cell may be used other than the laminate cell.

As shown in Fig. 5, the adhesive layer 13 can also be provided in a space B between the case 11 and the cell 12.

The adhesive layer 13 is provided in at least one of the space B between the case 11 and the cell 12 or the space A between the plurality of cells 12. Although not shown, the adhesive layer 13 may be provided in both the space B between the case 11 and the cell 12 and the space A between the plurality of cells 12.

Fig. 6 shows a battery structure (a battery pack) 20 including a battery pack case (housing) 14 and a plurality of battery modules 10 disposed in the battery pack case 14. The adhesive layer 13 is securely provided in a space C between the plurality of battery modules 10.

In Fig. 6, the adhesive layer 13 is also securely provided in a space D between the battery pack case 14 and the battery module 10.

While Fig. 6 shows an embodiment in which the adhesive layer 13 is securely provided in both the space D between the battery pack case 14 and the battery module 10 and the space C between the plurality of battery modules 10, the adhesive layer 13 may be securely provided in at least one of the space D between the battery pack case 14 and the battery module 10 or the space C between the plurality of battery modules 10.

Also, while Fig. 6 shows an embodiment in which no adhesive layer 13 is used inside the battery modules 10, the adhesive layer 13 may be provided inside the battery modules 10 disposed inside the battery pack, as shown in Figs. 3 and 5.

Fig. 7 schematically shows a battery structure 30 having no housing in a battery module. The battery structure 30 includes the plurality of battery cells 12 and a cooling plate 15, wherein the plurality of battery cells 12 adhere to the cooling plate 15 via the adhesive layer 13 that is a cured product of the curable battery adhesive composition.

Since the adhesive layer that is a cured product of the curable battery adhesive composition of the present invention has suitable adhesion, the respective structural bodies and cells, or cells, can be fixed to each other, and a certain level of strength can be ensured, and, also, such components can be removed as necessary. During removal, no excessive stress is produced, thus structural bodies and cells do not deform, resulting in excellent recyclability. Moreover, the cured product (the adhesive layer), while having a high thermal conductivity, has good stretchability and, thus, excellent shape conformability to the expansion and contraction of cells and the like.

## Examples

Below, the present invention will now be described in more detail by way of Examples, but the present invention is not limited to the Examples in any way.

In the Examples, the following methods were used to make evaluations.

[Shear adhesive strength, elongation under maximum stress]

Shear adhesive strength and elongation under maximum stress were measured in accordance with the tensile shear test of JIS K 6850:1999. Two pieces of a substrate {KTL plate (manufactured by Nippon Testpanel Co., Ltd. "material: SPCC-SD, specification: cationic electrodeposition coated (black)")} each having a length of 100 mm, a width of 25 mm, and a thickness of 2 mm were provided. The substrates were then placed such that their ends overlapped by a length and width of 25 mm × 25 mm, a curable battery adhesive composition obtained by mixing equal amounts of a first agent and a second agent (mass ratio of 1:1) was applied therebetween (applied to the portion where the substrates overlapped) such that the adhesive after being cured had a thickness of 2 mm, and cured by being left to stand for 2 weeks in an environment having 25°C and 50% RH to prepare a measurement sample. A tensile tester ("TENSILON RTC-1310A", manufactured by A&D Co., Ltd.) was used to perform a tensile test on the measurement sample at a room temperature of 25°C at a tensile speed of 10 mm/min and measure tensile shear strength, and the maximum stress of the resulting stress curve was regarded as shear adhesive strength. The above tensile shear strength test was performed, and the displacement obtained when the tensile stress showed the maximum value was regarded as elongation under maximum stress (mm).

[Viscosity]

The viscosities (Pa·s) of the first agent and the second agent at 25°C were each measured using a rheometer (for example, "MCR-302e" rheometer manufactured by Anton Paar) by regulating the temperature of the sample to 25°C using a Peltier plate, using φ20 mm parallel plates with a 1 mm gap, and continuously changing the shear rate within the range of 0.0001 to 100 (1/sec). The viscosity value (Pa·s) refers to the viscosity attained at shear rate 1 (1/s).

[Two-liquid formation]

The curable battery adhesives of the Examples and Comparative Examples were evaluated as follows.

A: The first agent and the second agent both had properties sufficient to allow viscosity measurement, and two-liquid formation was possible.
B: Viscosity measurement was not possible for one or both of the first agent and the second agent, and two-liquid formation was not possible.

[Thermal conductivity]

A curable battery adhesive composition obtained by mixing equal amounts of the first agent and the second agent (mass ratio 1:1) was cured in an environment having 25°C and 50% RH for 2 weeks to give a cured product, and this cured product was used as a sample to measure thermal conductivity.

The thermal conductivity was determined by a method involving measuring thermal resistance using a measuring device in accordance with ASTM D5470-06. Specifically, a cured product having a thickness of 1.0 mm, 1.5 mm, or 2.0 mm was prepared, and the thermal resistance and the thickness were measured when the cured product was compressed at a pressure of 30 psi. A graph depicting these three thermal resistance values was created, with the horizontal axis representing thickness and the vertical axis representing thermal resistance, and the least squares method was used to obtain an approximate straight line for the three points. The inclination of the approximate straight line was regarded as thermal conductivity.

The measurement of thermal resistance was performed at 80°C using LW-9389 manufactured by Long Win Science and Technology Corporation.

[Observation of failure mode]

A test piece after the measurement of shear adhesive strength described above was observed to examine the failure mode of the cured product (the adhesive layer).

<Overall evaluation>

A: Those having a thermal conductivity of 1.5 W/m·K or more, a shear adhesive strength of 0.7 to 2.5 MPa, and an elongation under maximum stress of 0.4 mm or more.
B: Those having a thermal conductivity of 1.5 W/m·K or more, and having a shear adhesive strength of 0.5 to 2.5 MPa

and an elongation under maximum stress of 0.3 mm or more while not satisfying one of the requirements concerning the shear adhesive strength and the elongation under maximum stress set forth in A.
C: Those to which any of the following applies: a thermal conductivity of less than 1.5 W/m·K, a shear adhesive strength of less than 0.5 MPa, and an elongation under maximum stress of less than 0.3 mm.

The components used in the Examples were as follows.

<Organic polymer having hydrolyzable silyl group>

- "MS Polymer SAX010" manufactured by Kaneka Corporation, number average molecular weight 2400, linear type, terminal silylation rate 94%, organic polymer having dimethoxymethylsilyl group at both terminals of polypropylene oxide
- "MS Polymer SAT115" manufactured by Kaneka Corporation, number average molecular weight 3400, linear type, terminal silylation rate 60%, organic polymer having dimethoxymethylsilyl group at both terminals of polypropylene oxide
- "MS Polymer SAT350" manufactured by Kaneka Corporation, number average molecular weight 6800, linear type, terminal silylation rate 91%, organic polymer having dimethoxymethylsilyl group at both terminals of polypropylene oxide
- "S4530" manufactured by AGC Inc., number average molecular weight 25000, linear type, terminal silylation rate 86%, organic polymer having dimethoxymethylsilyl group at both terminals of polypropylene oxide

<Thermally conductive filler>

- Aluminum hydroxide 1 (no surface treatment, irregular shape, average particle size 90 μm, specific gravity 2.4 g/cm$^3$)
- Aluminum hydroxide 2 (no surface treatment, irregular shape, average particle size 50 μm, specific gravity 2.4 g/cm$^3$)
- Aluminum hydroxide 3 (no surface treatment, irregular shape, average particle size 10 μm, specific gravity 2.4 g/cm$^3$)
- Aluminum hydroxide 4 (no surface treatment, irregular shape, average particle size 1 μm, specific gravity 2.4 g/cm$^3$)
- Aluminum hydroxide 5 (no surface treatment, irregular shape, average particle size 105 μm, specific gravity 2.4 g/cm$^3$)
- Aluminum oxide 1 (no surface treatment, spherical, average particle size 70 μm, specific gravity 3.94 g/cm$^3$)
- Aluminum oxide 2 (no surface treatment, spherical, average particle size 50 μm, specific gravity 3.94 g/cm$^3$)
- Aluminum oxide 3 (no surface treatment, spherical, average particle size 10 μm, specific gravity 3.94 g/cm$^3$)
- Aluminum oxide 4 (no surface treatment, spherical, average particle size 3 μm, specific gravity 3.94 g/cm$^3$)
- Aluminum oxide 5 (no surface treatment, spherical, average particle size 43 μm, specific gravity 3.94 g/cm$^3$)
- Aluminum oxide 6 (no surface treatment, spherical, average particle size 12.5 μm, specific gravity 3.94 g/cm$^3$)

<Plasticizer>

Triethylene glycol di(2-ethylhexanoate) 3GO
1,2-Cyclohexane dicarboxylic acid diisononyl ester DINCH

<Additives>

Silanol condensation catalyst: Dibutyltin dilaurate
Silanol condensation catalyst 2: Dioctyltin diversatate, trade name "U-830", manufactured by Nitto Chemical Industry Co., Ltd.
Water
Dehydrating agent: Vinyltrimethoxysilane
Adhesion promoter: N-(2-Aminoethyl)-3-aminopropyltrimethoxysilane
Dispersant: "DISPERBYK-106" manufactured by BYK-Chemie

Compatibilizer: Butyl carbitol
Antioxidant: SONGNOX 1010 manufactured by Songwon

<Calculation of total surface area of metal hydroxide>

The total surface area ($m^2$) of metal hydroxide per 100 g of the organic polymer having a hydrolyzable silyl group was determined by calculating the total surface area based on the surface area per gram ($m^2/g$) of each metal hydroxide blended in accordance with the blending ratio of each metal hydroxide.
For example, the surface area per gram ($m^2/g$) of metal hydroxide having an average particle size of A $\mu m$ is calculated using the following expression (1):

Surface area per gram ($m^2/g$) of metal hydroxide having average particle size of A $\mu m$ = Surface area of one particle ($m^2$/particle) / Volume of one particle ($m^3$/particle) / Specific gravity ($g/cm^3$) / $10^{-6}$ Expression (1) Expression (1)

In expression (1), the surface area of one particle ($m^2$/particle) is calculated by "$4 \times \pi \times (A/2)^2 \times 10^{-12}$".
In expression (1), the volume of one particle ($m^3$/particle) is calculated by "$(4/3) \times \pi \times (A/2)^3 \times 10^{-18}$". Note that $\pi$ is the ratio of the circumference to the diameter of a circle.

[Example 1]

According to the formulations in Table 1, a first agent was prepared by mixing an organic polymer having a hydrolyzable silyl group (MS polymer SAT350), aluminum hydroxide 1, aluminum hydroxide 4, aluminum oxide 2, aluminum oxide 3, a plasticizer, a silanol condensation catalyst, a dehydrating agent, an adhesion promoter, a dispersant, and an antioxidant. According to the formulations in Table 1, a second agent was prepared by mixing an organic polymer having a hydrolyzable silyl group (MS polymer SAT350), aluminum hydroxide 1, aluminum hydroxide 4, aluminum oxide 2, aluminum oxide 3, a plasticizer, water, and a dispersant. Accordingly, a curable battery adhesive composed of the first agent and the second agent was obtained.

[Examples 2 to 10, Reference Examples 1 to 2, Comparative Examples 1 to 6]

Curable battery adhesives composed of a first agent and a second agent were obtained in the same manner as in Example 1 except that the kinds and amounts of the components were changed according to Tables 1, 1-2, and 1-3.

Table 1

| | | | Example 1 | | Example 2 | | Example 3 | | Example 4 | | Example 5 | |
|---|---|---|---|---|---|---|---|---|---|---|---|---|
| | | | First agent | Second agent | First agent | Second agent | First agent | Second agent | First agent | Second agent | First agent | Second agent |
| Formulation (part by mass) | Organic polymer having hydrolyzable silyl group | MS Polymer SAX010 Mn2400, linear type, terminal silylation rate 94% | 35 | 35 | | | 35 | 35 | 35 | 35 | | |
| | | MS Polymer SAT115 Mn3400, linear type, terminal silylation rate 60% | | | | | | | | | | |
| | | MS Polymer SAT350 Mn6800, linear type, terminal silylation rate 91% | | | 35 | 35 | | | | | 35 | 35 |
| | | S4530 Mn25000, linear type, terminal silylation rate 86% | | | | | | | | | | |
| | Thermally conductive filler | Aluminum hydroxide1 (average particle size 90 μm) | 220 | 220 | | | | | | | 245 | 245 |
| | | Aluminum hydroxide2 (average particle size 50 μm) | | | 280 | 280 | 280 | 280 | | | | |
| | | Aluminum hydroxide3 (average particle size 10 μm) | | | 140 | 140 | 140 | 140 | | | 245 | 245 |
| | | Aluminum hydroxide4 (average particle size 1 μm) | 80 | 80 | 140 | 140 | 140 | 140 | 119 | 119 | 110 | 110 |
| | | Aluminum oxide 1 (average particle size 70 μm) | | | | | | | 510 | 510 | | |
| | | Aluminum oxide 2 (average particle size 50 μm) | 180 | 180 | | | | | | | 368 | 367 |
| | | Aluminum oxide 3 (average particle size 10 μm) | 180 | 180 | | | | | | | | |
| | | Aluminum oxide 4 (average particle size 3 μm) | | | | | | | 170 | 170 | | |
| | Additive | Plasticizer 3GO | 50 | 50 | 50 | 50 | 50 | 50 | 50 | 50 | 50 | 50 |
| | | Silanol condensation catalyst | 2 | | 2 | | 2 | | 2 | | 2 | |
| | | Water | | 1 | | 1 | | 1 | | 1 | | 1 |

(continued)

| | | | Example 1 | | Example 2 | | Example 3 | | Example 4 | | Example 5 | |
|---|---|---|---|---|---|---|---|---|---|---|---|---|
| | | | First agent | Second agent | First agent | Second agent | First agent | Second agent | First agent | Second agent | First agent | Second agent |
| | | Dehydrating agent | 3 | | 3 | | 3 | | 3 | | 3 | |
| | | Adhesion promoter | 6 | | 6 | | 6 | | 6 | | 6 | |
| | | Dispersant | | | 3 | 3 | 3 | 3 | 3 | 3 | 3 | 3 |
| | | Antioxidant | 1 | | 1 | | 1 | | 1 | | 1 | |
| Property | Content of thermally conductive filler (% by volume) | | 70% | | 71% | | 71% | | 70% | | 78% | |
| | Content of metal hydroxide (% by volume) (first agent and second agent) | | 40% | 41% | 70% | 72% | 70% | 72% | 15% | 16% | 56% | 58% |
| | Content of metal hydroxide (% by volume) (composition after mixing) | | 40% | | 71% | | 71% | | 16% | | 57% | |
| | Total surface area of metal hydroxide per 100 g of polymer (first agent and second agent) | | 589 | 589 | 1140 | 1140 | 1140 | 1140 | 850 | 850 | 980 | 980 |
| | Total surface area of metal hydroxide per 100 g of polymer (composition after mixing) | | 589 | | 1140 | | 1140 | | 850 | | 980 | |
| | Viscosity characteristic | Two-liquid formation | A | | A | | A | | A | | A | |
| | | Viscosity $0.794s^{-1}$ | 537 | 888 | 724 | 904 | 247 | 143 | 6.6 | 5.4 | 1030 | 1023 |
| | | $1.58s^{-1}$ | 324 | 823 | 525 | 620 | 189 | 93 | 3.9 | 3.1 | 816 | 792 |
| | | $3.16s^{-1}$ | 193 | 489 | 395 | 436 | 151 | 67 | 2.4 | 1.9 | 643 | 623 |
| | | $1 s^{-1}$ | 481 | 871 | 672 | 830 | 232 | 130 | 5.9 | 4.8 | 974 | 962 |
| | | Viscosity difference $1 s^{-1}$ | 390 | | 158 | | 102 | | 1.1 | | 11 | |
| Evaluation | Shear adhesive strength (MPa) | | 0.80 | | 0.68 | | 0.80 | | 0.89 | | 0.75 | |
| | Elongation under maximum stress (mm) | | 0.31 | | 0.78 | | 0.39 | | 0.44 | | 0.46 | |
| | Failure mode | | Thin-layer cohesive failure | | Cohesive failure | | Cohesive/thin-layer cohesive failure | | Cohesive failure | | Thin-layer cohesive failure | |
| | Thermal conductivity (W/mK) | | 2W/mK | | 2W/mK | | 2W/mK | | 3W/mK | | 3W/mK | |
| | Overall evaluation | | B | | B | | B | | A | | A | |

Table 1-2

| | | | Example 6 | |
|---|---|---|---|---|
| | | | First agent | Second agent |
| Formulation (part by mass) | Organic polymer having hydrolyzable silyl group | MS Polymer SAX010 Mn2400, linear type, terminal silylation rate 94% | | |
| | | MS Polymer SAT115 Mn3400, linear type, terminal silylation rate 60% | | |
| | | MS Polymer SAT350 Mn6800, linear type, terminal silylation rate 91% | | |
| | | S4530 Mn25000, linear type, terminal silylation rate 86% | 3.8 | 3.9 |
| | Thermally conductive filler | Aluminum hydroxide1 (average particle size 90 μm) | | |
| | | Aluminum hydroxide2 (average particle size 50 μm) | | |
| | | Aluminum hydroxide3 (average particle size 10 μm) | | |
| | | Aluminum hydroxide4 (average particle size 1 μm) | 11.0 | 11.0 |
| | | Aluminum hydroxide5 (average particle size 105 μm) | 30.1 | 30.3 |
| | | Aluminum oxide 1 (average particle size 70 μm) | | |
| | | Aluminum oxide 2 (average particle size 50 μm) | | |
| | | Aluminum oxide 3 (average particle size 10 μm) | | |
| | | Aluminum oxide 4 (average particle size 3 μm) | | |
| | | Aluminum oxide 5 (average particle size 43 μm) | 24.1 | 24.2 |
| | | Aluminum oxide 6 (average particle size 12.5 μm) | 24.1 | 24.2 |
| | Additive | Plasticizer 3GO | 5.5 | 5.0 |
| | | Silanol condensation catalyst2 | 0.2 | |
| | | Water | | 0.1 |
| | | Dehydrating agent | 0.3 | |
| | | Adhesion promoter | 0.7 | |
| | | Dispersant | 0.1 | 0.1 |
| | | Compatibilizer | | 0.6 |
| | | Antioxidant | | |

(continued)

| | | | Example 6 | |
|---|---|---|---|---|
| | | | First agent | Second agent |
| Property | Content of thermally conductive filler (% by volume) | | 74% | |
| | Content of metal hydroxide (% by volume) (first agent and second agent) | | 43% | 44% |
| | Content of metal hydroxide (% by volume) (composition after mixing) | | 43% | |
| | Total surface area of metal hydroxide per 100 g of polymer (first agent and second agent) | | 733 | 733 |
| | Total surface area of metal hydroxide per 100 g of polymer (composition after mixing) | | 733 | |
| | Viscosity characteristic | Two-liquid formation | A | |
| | | Viscosity $0.794s^{-1}$ | 474 | 619 |
| | | $1.58s^{-1}$ | 370 | 502 |
| | | $3.16s^{-1}$ | 296 | 418 |
| | | $1\ s^{-1}$ | 447 | 588 |
| | | Viscosity difference $1\ s^{-1}$ | 142 | |
| Evaluation | Shear adhesive strength (MPa) | | 0.50 | |
| | Elongation under maximum stress (mm) | | 1.86 | |
| | Failure mode | | Cohesive failure | |
| | Thermal conductivity (W/mK) | | 2.8 | |
| | Overall evaluation | | B | |

Table 1-3

| | | | Example 7 | | Example 8 | | Example 9 | | Example 10 | |
|---|---|---|---|---|---|---|---|---|---|---|
| | | | First agent | Second agent | First agent | Second agent | First agent | Second agent | First agent | Second agent |
| Formulation (part by mass) | Organic polymer having hydrolyzable silyl group | MS Polymer SAX010 Mn2400, linear type, terminal silylation rate 94% | | | | | 40.0 | 40.0 | 80.0 | 90.0 |
| | | MS Polymer SAT350 Mn6800, linear type, terminal silylation rate 91% | 40.0 | 40.0 | 80.0 | 90.0 | | | | |
| | Thermally conductive filler | Aluminum hydroxidel (average particle size 90 μm) | 155.0 | 155.0 | 155.0 | 155.0 | 155.0 | 155.0 | 155.0 | 155.0 |
| | | Aluminum hydroxide2 (average particle size 50 μm) | | | | | | | | |
| | | Aluminum hydroxide3 (average particle size 10 μm) | | | | | | | | |
| | | Aluminum hydroxide4 (average particle size 1 μm) | 100.0 | 100.0 | 100.0 | 100.0 | 100.0 | 100.0 | 100.0 | 100.0 |
| | | Aluminum hydroxide5 (average particle size 105 μm) | | | | | | | | |
| | | Aluminum oxide 1 (average particle size 70 μm) | 100.0 | 100.0 | 100.0 | 100.0 | 100.0 | 100.0 | 100.0 | 100.0 |
| | | Aluminum oxide 2 (average particle size 50 μm) | | | | | | | | |
| | | Aluminum oxide 3 (average particle size 10 μm) | | | | | | | | |
| | | Aluminum oxide 4 (average particle size 3 μm) | | | | | | | | |
| | | Aluminum oxide 5 (average particle size 75 μm) | | | | | | | | |
| | | Aluminum oxide 5 (average particle size 43 μm) | | | | | | | | |
| | | Aluminum oxide 6 (average particle size 12.5 μm) | 60.0 | 60.0 | 60.0 | 60.0 | 60.0 | 60.0 | 60.0 | 60.0 |
| | Additive | Plasticizer DINCH | 40.0 | 50.0 | | | 40.0 | 50.0 | | |
| | | Silanol condensation catalyst2 | 2.0 | | 2.0 | | 2.0 | | 2.0 | |
| | | Water | | 1.0 | | 1.0 | | 1.0 | | 1.0 |
| | | Dehydrating agent | 3.0 | | 3.0 | | 3.0 | | 3.0 | |
| | | Adhesion promoter | 3.0 | | 3.0 | | 3.0 | | 3.0 | |
| | | Dispersant | 1.0 | | 1.0 | | 1.0 | | 1.0 | |

(continued)

| | | | Example 7 | | Example 8 | | Example 9 | | Example 10 | |
|---|---|---|---|---|---|---|---|---|---|---|
| | | | First agent | Second agent | First agent | Second agent | First agent | Second agent | First agent | Second agent |
| Property | Content of thermally conductive filler (% by volume) | | 62% | | 62% | | 62% | | 62% | |
| | Content of metal hydroxide (% by volume) (first agent and second agent) | | 45% | 44% | 45% | 45% | 45% | 44% | 45% | 45% |
| | Content of metal hydroxide (% by volume) (composition after mixing) | | 45% | | 45% | | 45% | | 45% | |
| | Total surface area of metal hydroxide per 100 g of polymer (first agent and second agent) | | 636 | 636 | 318 | 283 | 636 | 636 | 318 | 283 |
| | Total surface area of metal hydroxide per 100 g of polymer (composition after mixing) | | 636 | | 299 | | 636 | | 299 | |
| | Viscosity characteristic | Two-liquid formation | A | | A | | A | | A | |
| | | Viscosity $0.794 s^{-1}$ | 412 | 599 | 1231 | 1994 | 129 | 401 | 726 | 1011 |
| | | $1.58 s^{-1}$ | 255 | 351 | 732 | 1040 | 90 | 240 | 429 | 578 |
| | | $3.16 s^{-1}$ | 133 | 218 | 459 | 577 | 58 | 125 | 270 | 348 |
| | | $1 s^{-1}$ | 310 | 400 | 982 | 1553 | 110 | 300 | 558 | 753 |
| | | Viscosity difference $1 s^{-1}$ | 90 | | 571 | | 190 | | 195 | |
| Evaluation | Shear adhesive strength (MPa) | | 0.85 | | 1.19 | | 0.92 | | 1.34 | |
| | Elongation under maximum stress (mm) | | 2.50 | | 1.06 | | 0.76 | | 0.39 | |
| | Failure mode | | Thin-layer cohesive failure | | Thin-layer cohesive failure | | Thin-layer cohesive failure | | Thin-layer cohesive failure | |
| | Thermal conductivity (W/mK) | | 2 | | 2 | | 2 | | 2 | |
| | Overall evaluation | | A | | A | | A | | B | |

Table 2

| | | | Reference Example 1 | | Reference Example 2 | |
|---|---|---|---|---|---|---|
| | | | First agent | Second agent | First agent | Second agent |
| Formulation (part by mass) | Organic polymer having hydrolyzable silyl group | MS Polymer SAX010 Mn2400, linear type, terminal silylation rate 94% | 70 | | | |
| | | MS Polymer SAT115 Mn3400, linear type, terminal silylation rate 60% | | | 70 | |
| | | MS Polymer SAT350 Mn6800, linear type, terminal silylation rate 91% | | | | |
| | | S4530 Mn25000, linear type, terminal silylation rate 86% | | | | |
| | Thermally conductive filler | Aluminum hydroxide1 (average particle size 90 μm) | | | | |
| | | Aluminum hydroxide2 (average particle size 50 μm) | 280 | 280 | 280 | 280 |
| | | Aluminum hydroxide3 (average particle size 10 μm) | 140 | 140 | 140 | 140 |
| | | Aluminum hydroxide4 (average particle size 1 μm) | 140 | 140 | 140 | 140 |
| | | Aluminum oxide 1 (average particle size 70 μm) | | | | |
| | | Aluminum oxide 2 (average particle size 50 μm) | | | | |
| | | Aluminum oxide 3 (average particle size 10 μm) | | | | |
| | | Aluminum oxide 4 (average particle size 3 μm) | | | | |
| | Additive | Plasticizer 3GO | 15 | 85 | 15 | 85 |
| | | Silanol condensation catalyst | | 2 | | 2 |
| | | Water | | 1 | | 1 |
| | | Dehydrating agent | 3 | | 3 | |
| | | Adhesion promoter | 6 | | 6 | |
| | | Dispersant | 3 | 3 | 3 | 3 |
| | | Antioxidant | 1 | | 1 | |

(continued)

| | | | Reference Example 1 | | Reference Example 2 | |
|---|---|---|---|---|---|---|
| | | | First agent | Second agent | First agent | Second agent |
| Property | Content of thermally conductive filler (% by volume) | | 71% | | 71% | |
| | Content of metal hydroxide (% by volume) (first agent and second agent) | | 70% | 71% | 70% | 71% |
| | Content of metal hydroxide (% by volume) (composition after mixing) | | 71% | | 71% | |
| | Total surface area of metal hydroxide per 100 g of polymer (first agent and second agent) | | 570 | - | 570 | - |
| | Total surface area of metal hydroxide per 100 g of polymer (composition after mixing) | | 1140 | | 1140 | |
| | Viscosity characteristic | Two-liquid formation | A | | A | |
| | | Viscosity $0.794s^{-1}$ | 837 | 202 | 746 | 140 |
| | | $1.58s^{-1}$ | 645 | 151 | 620 | 111 |
| | | $3.16s^{-1}$ | 498 | 104 | 518 | 80 |
| | | $1\ s^{-1}$ | 787 | 189 | 713 | 132 |
| | | Viscosity difference $1\ s^{-1}$ | 598 | | 581 | |
| Evaluation | Shear adhesive strength (MPa) | | 0.87 | | 0.06 | |
| | Elongation under maximum stress (mm) | | 0.30 | | 0.56 | |
| | Failure mode | | Cohesive failure | | Interfacial failure | |
| | Thermal conductivity (W/mK) | | 2W/mK | | 2W/mK | |
| | Overall evaluation | | B | | C | |

Table 3

| | | | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|---|
| | | | First agent | Second agent | First agent | Second agent | First agent | Second agent | First agent | Second agent | First agent | Second agent | First agent | Second agent |
| Formulation (part by mass) | Organic polymer having hydrolyzable silyl group | MS Polymer SAX010 Mn2400, linear type, terminal silylation rate 94% | | | | | | | 25 | 25 | | | | |
| | | MS Polymer SAT115 Mn3400, linear type, terminal silylation rate 60% | | | | | 35 | 35 | | | | | 35 | 35 |
| | | MS Polymer SAT350 Mn6800, linear type, terminal silylation rate 91% | 35 | 35 | | | | | | | 25 | 25 | | |
| | | S4530 Mn25000, linear type, terminal silylation rate 86% | | | 35 | 35 | | | | | | | | |
| | Thermally conductive filler | Aluminum hydroxide1 (average particle size 90 μm) | | | 220 | 220 | 220 | 220 | 385 | 385 | 385 | 385 | | |
| | | Aluminum hydroxide2 (average particle size 50 μm) | 267 | 266 | | | | | | | | | | |
| | | Aluminum hydroxide3 (average particle size 10 μm) | | | | | | | 190 | 190 | 190 | 190 | | |
| | | Aluminum hydroxide4 (average particle size 1 μm) | | | 80 | 80 | 80 | 80 | 145 | 145 | 145 | 145 | 119 | 119 |

(continued)

| | | | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|---|
| | | | First agent | Second agent | First agent | Second agent | First agent | Second agent | First agent | Second agent | First agent | Second agent | First agent | Second agent |
| | | Aluminum oxide 1 (average particle size 70 μm) | | | | | | | | | | | 510 | 510 |
| | | Aluminum oxide 2 (average particle size 50 μm) | | | 180 | 180 | 180 | 180 | 190 | 190 | 190 | 190 | | |
| | | Aluminum oxide 3 (average particle size 10 μm) | | | 180 | 180 | 180 | 180 | | | | | | |
| | | Aluminum oxide 4 (average particle size 3 μm) | 309 | 309 | | | | | | | | | 170 | 170 |
| | Additive | Plasticizer 3GO | 50 | 50 | 50 | 50 | 50 | 50 | 60 | 60 | 60 | 60 | 50 | 50 |
| | | Silanol condensation catalyst | 2 | | 2 | | 2 | | 2 | | 2 | | 2 | |
| | | Water | | 1 | | 1 | | 1 | | 1 | | 1 | | 1 |
| | | Dehydrating agent | 3 | | 3 | | 3 | | 3 | | 3 | | 3 | |
| | | Adhesion promoter | 6 | | 6 | | 6 | | 6 | | 6 | | 6 | |
| | | Dispersant | 3 | 3 | 3 | 3 | | | 3 | 3 | 3 | 3 | 3 | 3 |
| | | Antioxidant | 1 | | 1 | | 1 | | 1 | | 1 | | 1 | |
| Property | Content of thermally conductive filler (% by volume) | | 66% | | 69% | | 70% | | 78% | | 78% | | 70% | |
| | Content of metal hydroxide (% by volume) (first agent and second agent) | | 38% | 40% | 39% | 41% | 40% | 41% | 67% | 68% | 67% | 68% | 15% | 16% |
| | Content of metal hydroxide (% by volume) (composition after mixing) | | 39% | | 40% | | 40% | | 67% | | 67% | | 16% | |
| | Total surface area of metal hydroxide per 100 g of polymer (first agent and second agent) | | 38 | 38 | 589 | 589 | 589 | 589 | 1683 | | 1683 | 1683 | 850 | 850 |

(continued)

| | | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|
| | | First agent | Second agent | First agent | Second agent | First agent | Second agent | First agent | Second agent | First agent | Second agent | First agent | Second agent |
| Total surface area of metal hydroxide per 100 g of polymer (composition after mixing) | | 38 | | 589 | | 589 | | 1683 | | 1683 | | 850 | |
| Viscosity characteristic | Two-liquid formation | A | | A | | A | | A | | A | | A | |
| | Viscosity $0.794 s^{-1}$ | 261 | 73 | 511 | 186 | 551 | 1798 | 390 | 227 | 402 | 433 | 4.6 | 4.7 |
| | $1.58 s^{-1}$ | 235 | 61 | 338 | 140 | 339 | 1072 | 286 | 155 | 286 | 318 | 2.7 | 2.8 |
| | $3.16 s^{-1}$ | 207 | 56 | 237 | 112 | 226 | 504 | 218 | 113 | 214 | 232 | 1.8 | 1.6 |
| | $1 s^{-1}$ | 254 | 70 | 466 | 174 | 495 | 1608 | 363 | 208 | 372 | 403 | 4.1 | 4.2 |
| | Viscosity difference $1 s^{-1}$ | 184 | | 292 | | 1112 | | 155 | | 31 | | 0.1 | |
| Evaluation | Shear adhesive strength (MPa) | 0.43 | | 0.38 | | 0.07 | | 0.66 | | 0.66 | | 0.05 | |
| | Elongation under maximum stress (mm) | 0.89 | | 1.75 | | 0.44 | | 0.24 | | 0.22 | | 0.70 | |
| | Failure mode | Thin-layer cohesive failure | | Cohesive failure | | Thin-layer cohesive failure | | Thin-layer cohesive failure | | Thin-layer cohesive failure | | Interfacial failure | |
| | Thermal conductivity (W/mK) | 2W/mK | | 2W/mK | | 2W/mK | | 3W/mK | | 3W/mK | | 3W/mK | |
| | Overall evaluation | C | | C | | C | | C | | C | | C | |

The curable battery adhesive of each Example was composed of a first agent and a second agent both containing an organic polymer having a hydrolyzable silyl group and a thermally conductive filler. The first agent and the second agent each had a viscosity in an appropriate range, and were usable as two liquids. The cured product obtained by curing the curable battery adhesive composition obtained by mixing the first agent and the second agent had a shear adhesive strength of 0.5 to 2.5 MPa, an elongation under maximum stress of 0.3 mm or more, and a thermal conductivity of 1.5 W/m·K or more. That is to say, the curable battery adhesives of the Examples had a high thermal conductivity of 1.5 W/m·K or more, and thus had excellent heat dissipating properties. Also, the elongation under maximum stress showed a large value of 0.3 mm or more, indicating excellent conformability to the expansion and contraction of battery cells. Moreover, since the shear adhesive strength was 0.5 to 2.5 MPa, the cured product was capable of securing with appropriate adhesion the components that form the battery structure, and did not require excessive stress when being removed, thus having excellent removability.

The curable battery adhesive of Reference Example 1 satisfied the predetermined values of the present invention with respect to shear adhesive strength, elongation under maximum stress, and thermal conductivity. On the other hand, the formulations of the first agent and the second agent were greatly different, for example, only the first agent contained an organic polymer having a hydrolyzable silyl group, and the amount of plasticizer (diluent) was small in the first agent. Accordingly, there was a large difference between the viscosities, resulting in poor handleability. Concerning the curable battery adhesive of Reference Example 2, the formulations of the first agent and the second agent were greatly different as in Reference Example 1 and, accordingly, there was a large difference between the viscosities, resulting in poor handleability. Moreover, since the terminal silylation rate of the organic polymer was low, the curable battery adhesive of Reference Example 2 had a reduced reactivity with the thermally conductive filler having a hydroxyl group and thus poor shear adhesive strength.

It is contemplated in Reference Examples 1 and 2 to reduce the viscosity difference by changing the content of the thermally conductive filler in the first agent and the second agent. In such a case, however, only a low-viscosity organic polymer can be used in the first agent in which the amount of plasticizer is small, thus impairing design freedom. From the viewpoint of reducing viscosity, it is also contemplated to increase the proportion of alumina, which has high thermal conductivity, to lower the total amount of thermally conductive filler. In such a case, however, the amount of aluminum hydroxide is reduced, and the shear adhesive strength will likely be impaired.

The curable battery adhesive of Comparative Example 1 had poor shear adhesive strength, and it was not possible to secure the components that form the battery structure with appropriate adhesion. This seems to be because the total surface area of metal hydroxide per 100 g of the organic polymer was smaller than that in the Examples.

The curable battery adhesive of Comparative Example 2 also had poor shear adhesive strength, and it was not possible to secure the components that form the battery structure with appropriate adhesion. This seems to be because, in Comparative Example 2, the molecular weight of the organic polymer having a hydrolyzable silyl group used was relatively high, and thus the concentration of points of reaction with the thermally conductive filler having a hydroxyl group was low.

The curable battery adhesives of Comparative Examples 3 and 6 also had poor shear adhesive strength, and it was not possible to secure the components that form the battery structure with appropriate adhesion. This seems to be because, in Comparative Examples 3 and 6, the terminal silylation rate of the organic polymer having a hydrolyzable silyl group used was low, and thus the concentration of points of reaction with the thermally conductive filler having a hydroxyl group was low.

In Comparative Examples 4 and 5, the elongation under maximum stress was small and, accordingly, the conformability to the expansion and contraction of battery cells was poor. This seems to be because a large amount of aluminum hydroxide having a small particle size was contained, and thus the total surface area of metal hydroxide per 100 g of the organic polymer was large.

Reference Signs List

| | |
|---|---|
| 10 | Battery structure |
| 11 | Battery module case |
| 12 | Cell |
| 12a | Positive electrode |
| 12b | Negative electrode |
| 12c | Flat surface |
| 12d | Edge |
| 13 | Adhesive layer |
| 14 | Battery pack case |
| 15 | Cooling plate |

| | |
|---|---|
| 20 | Battery structure |
| 30 | Syringe |
| 31 | First syringe |
| 31A | Outlet of first syringe |
| 32 | Second syringe |
| 32A | Outlet of second syringe |
| 33A, 34A | Barrel |
| 33B, 34B | Barrel lid |
| 35, 45 | First agent |
| 36, 46 | Second agent |
| 38 | Mixer |
| 39 | Outlet of mixer |
| 40 | Battery structure |
| 41 | First pail can |
| 42 | Second pail can |
| 43A, 44A | Container body having opening |
| 43B, 44B | Lid for closing opening of container body |

## Claims

**1.** A curable battery adhesive, comprising:

a first agent comprising a silanol condensation catalyst and a thermally conductive filler, and provided in a first container, and
a second agent comprising an organic polymer having a hydrolyzable silyl group and a thermally conductive filler, and provided in a second container,
a cured product obtained by curing, in an environment of 25°C and 50% RH for 2 weeks, a curable battery adhesive composition obtained by mixing the first agent and the second agent having a shear adhesive strength of 0.5 to 2.5 MPa in a tensile shear test,
the cured product when having a thickness of 2 mm having an elongation under maximum stress of 0.3 mm or more in the tensile shear test, and
the cured product having a thermal conductivity of 1.5 W/m·K or more.

**2.** The curable battery adhesive according to claim 1, wherein

a content of the thermally conductive filler in the curable battery adhesive composition is 60 to 85% by volume, and the thermally conductive filler comprises a thermally conductive filler having a hydroxyl group on a surface.

**3.** The curable battery adhesive according to claim 1 or 2, wherein

a content of the thermally conductive filler in the curable battery adhesive composition is 60 to 85% by volume, and the thermally conductive filler comprises metal hydroxide, and
a total surface area of the metal hydroxide per 100 g of the organic polymer having a hydrolyzable silyl group in the curable battery adhesive composition is 200 to 1500 $m^2$.

**4.** The curable battery adhesive according to claim 1 or 2, wherein the first agent further comprises the organic polymer having a hydrolyzable silyl group.

**5.** The curable battery adhesive according to claim 1 or 2, wherein the second agent further comprises water.

**6.** The curable battery adhesive according to claim 3, wherein a content of the metal hydroxide in the curable battery adhesive composition is 10 to 80% by volume.

**7.** The curable battery adhesive according to claim 3, wherein the metal hydroxide is aluminum hydroxide.

**8.** The curable battery adhesive according to claim 3, wherein the metal hydroxide is surface-untreated aluminum hydroxide.

**9.** The curable battery adhesive according to claim 1 or 2, wherein the thermally conductive filler comprises small-particle aluminum hydroxide having an average particle size of 20 μm or less.

**10.** The curable battery adhesive according to claim 1 or 2, wherein the organic polymer having a hydrolyzable silyl group is a polyalkylene oxide having a hydrolyzable silyl group.

**11.** The curable battery adhesive according to claim 1 or 2, wherein the organic polymer having a hydrolyzable silyl group has the hydrolyzable silyl group at a terminal of a linear main chain.

**12.** The curable battery adhesive according to claim 1 or 2, wherein the organic polymer having a hydrolyzable silyl group has a number average molecular weight (Mn) of 1000 to 40000.

**13.** The curable battery adhesive according to claim 1 or 2, wherein at least one of the first agent or the second agent further comprises a plasticizer.

**14.** The curable battery adhesive according to claim 1 or 2, wherein

the first agent has a viscosity $\eta 1$ (25°C, shear rate 1 (1/sec)) of 100 to 1000 Pa·s,
the second agent has a viscosity $\eta 2$ (25°C, shear rate 1 (1/sec)) of 100 to 1000 Pa·s, and
an absolute value of difference between the viscosity $\eta 1$ and the viscosity $\eta 2$ is 400 Pa·s or less.

**15.** A battery structure comprising a structural body and a plurality of cells disposed in the structural body,

an adhesive layer being disposed at least one of between the structural body and a cell or between the plurality of cells,
the adhesive layer being a cured product of a curable battery adhesive composition comprising an organic polymer having a hydrolyzable silyl group and a thermally conductive filler, the cured product having a shear adhesive strength of 0.5 to 2.5 MPa in a tensile shear test,
the cured product when having a thickness of 2 mm having an elongation under maximum stress of 0.3 mm or more in the tensile shear test, and
the cured product having a thermal conductivity of 1.5 W/m·K or more.

Fig. 1

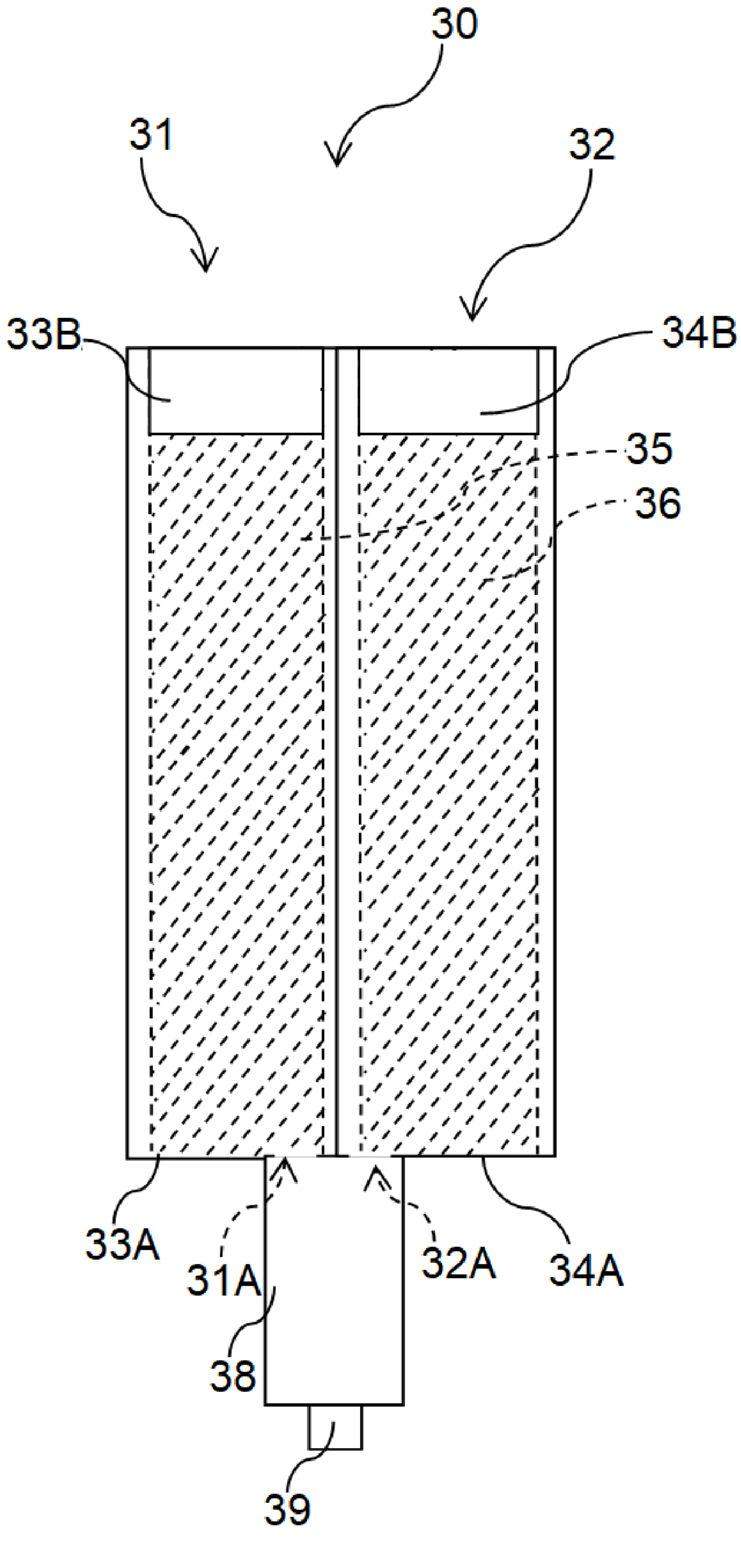

Fig. 2

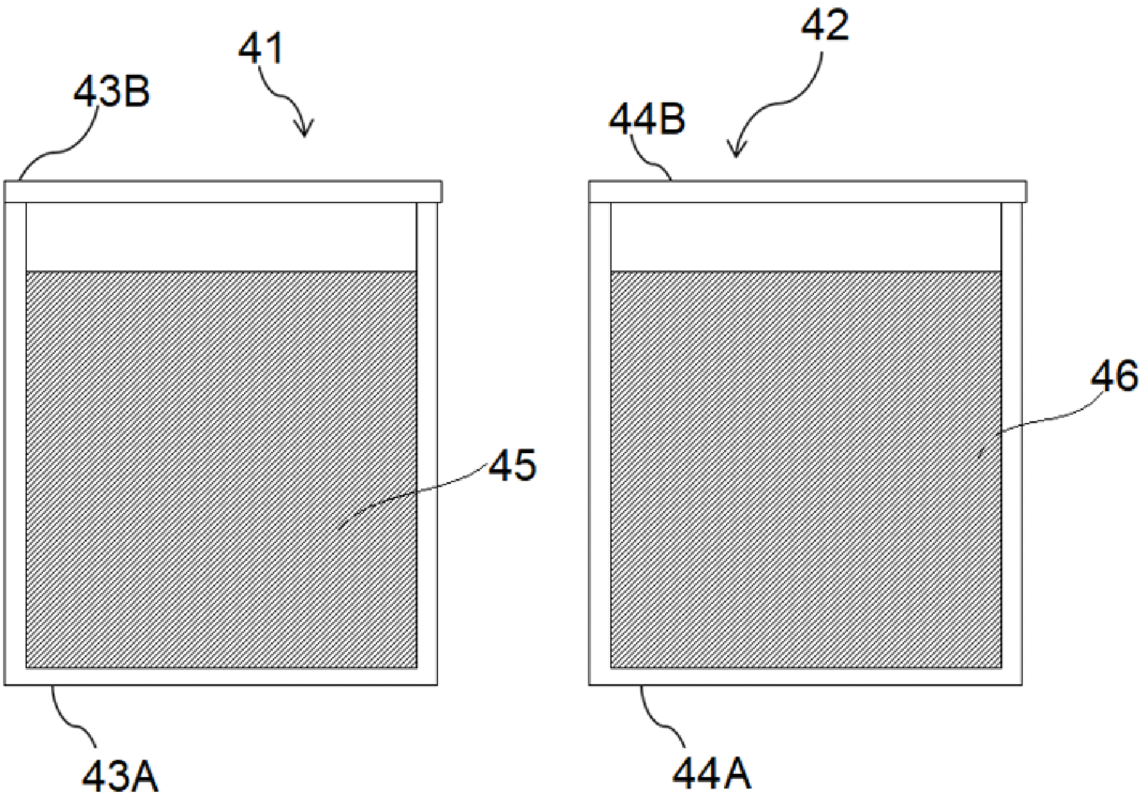


Fig. 3

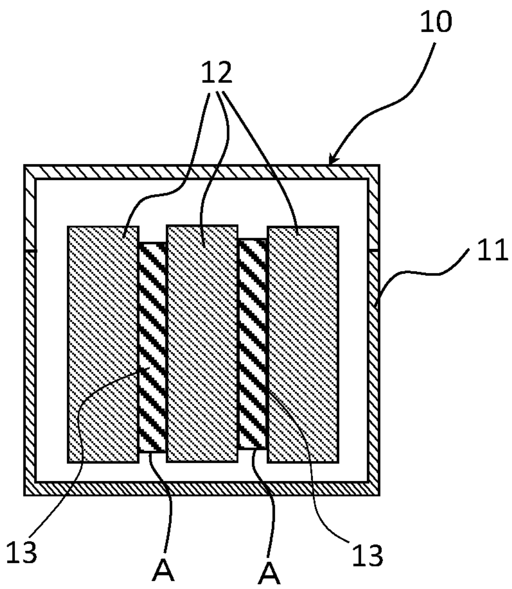

Fig. 4

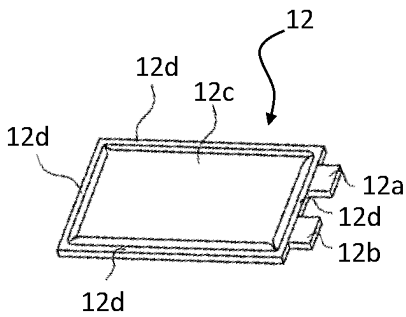


Fig. 5

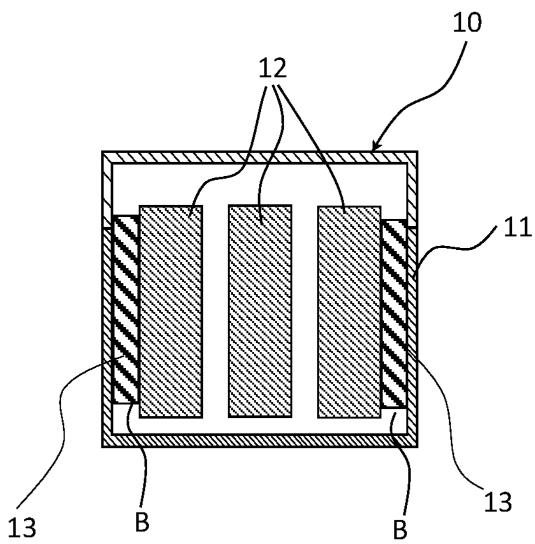

Fig. 6

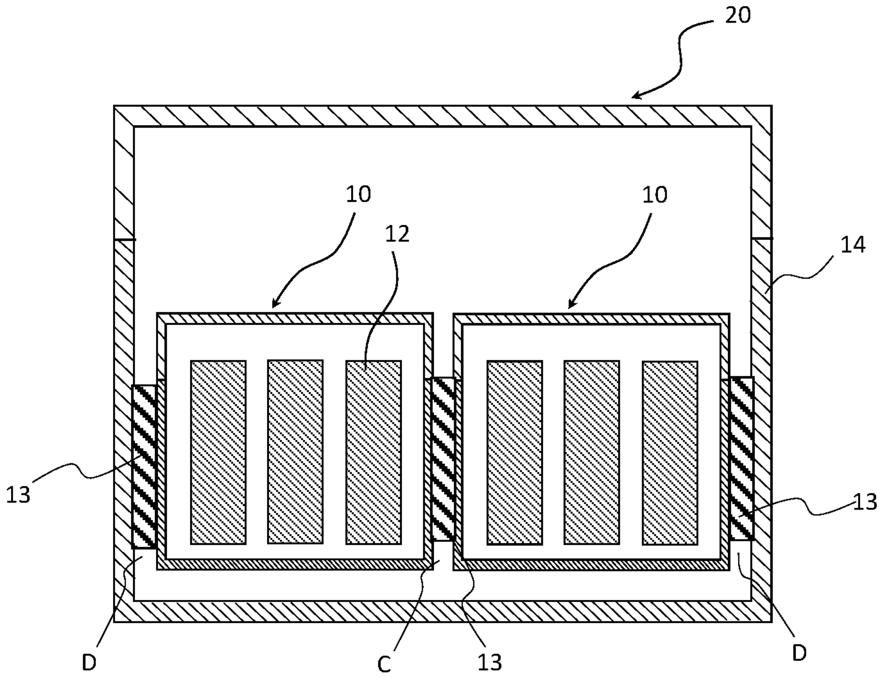


Fig. 7

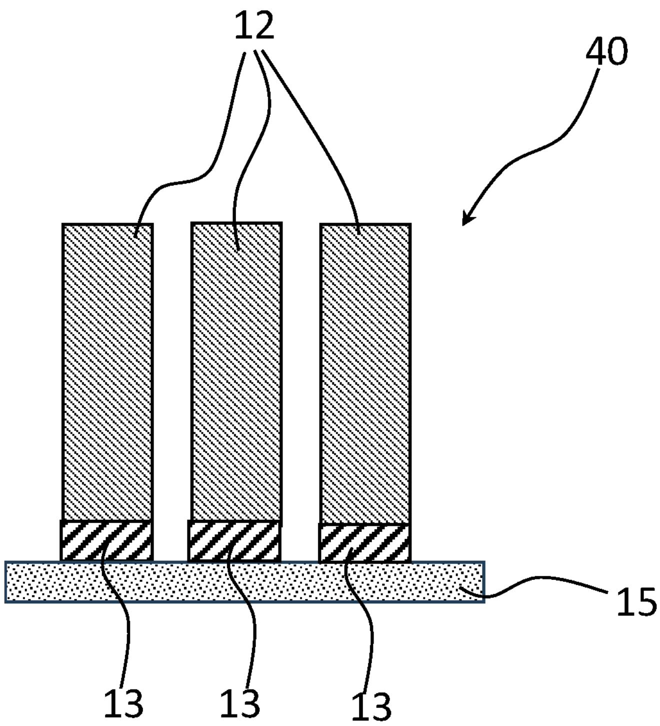

# INTERNATIONAL SEARCH REPORT

International application No. **PCT/JP2024/027406**

## A. CLASSIFICATION OF SUBJECT MATTER

***C09J 201/10***(2006.01)i; ***C09J 11/04***(2006.01)i; ***C09J 11/06***(2006.01)i; ***C09J 171/02***(2006.01)i; ***C09K 5/14***(2006.01)i; ***H01M 10/613***(2014.01)i; ***H01M 10/625***(2014.01)i; ***H01M 10/647***(2014.01)i; ***H01M 10/651***(2014.01)i; ***H01M 10/653***(2014.01)i; ***H01M 10/6556***(2014.01)i

FI: C09J201/10; C09J11/04; C09J11/06; C09J171/02; C09K5/14; H01M10/613; H01M10/625; H01M10/647; H01M10/651; H01M10/653; H01M10/6556

According to International Patent Classification (IPC) or to both national classification and IPC

## B. FIELDS SEARCHED

Minimum documentation searched (classification system followed by classification symbols)

C09J1/00-5/10; 9/00-201/10; C08K3/00-13/08; C08L1/00-101/14; C09K5/00-5/20; H01M10/00-10/667

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2019-527276 A (DOW SILICONES CORP.) 26 September 2019 (2019-09-26) claims 1-5, 7-8, 13, 15, 18-20, paragraphs [0001], [0023], [0025], [0027]-[0028], [0030], [0032]-[0033], [0050]-[0051], [0054], [0058]-[0060], [0063]-[0068], [0076]-[0077], [0081], [0090], [0092], [0099], [0101]-[0117] | 1-15 |
| A | WO 2023/053760 A1 (WACKER ASAHIKASEI SILICONE CO., LTD.) 06 April 2023 (2023-04-06) entire text, all drawings | 1-15 |
| A | WO 2022/064931 A1 (THREE BOND CO., LTD.) 31 March 2022 (2022-03-31) entire text, all drawings | 1-15 |
| A | JP 2011-256214 A (DENKI KAGAKU KOGYO KK) 22 December 2011 (2011-12-22) entire text, all drawings | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027406**

| Patent document cited in search report | Publication date (day/month/year) | Patent family member(s) | Publication date (day/month/year) |
|---|---|---|---|
| JP 2019-527276 A | 26 September 2019 | WO 2018/024865 A1<br>claims 1-5, 7-8, 13, 15, 18-20, paragraphs [0001], [0023], [0025], [0027]-[0028], [0030], [0032]-[0033], [0050]-[0051], [0054], [0058]-[0060], [0063]-[0067], [0075]-[0076], [0080], [0089], [0091], [0098], [0100]-[0114], tables 1-2 | |
| | | US 2019/0177584 A1 | |
| | | CN 109476919 A | |
| | | KR 10-2019-0025723 A | |
| WO 2023/053760 A1 | 06 April 2023 | KR 10-2024-0047480 A | |
| | | CN 118251465 A | |
| WO 2022/064931 A1 | 31 March 2022 | US 2023/0332028 A1<br>entire text, all drawings | |
| | | EP 4219629 A1 | |
| | | CN 116194524 A | |
| JP 2011-256214 A | 22 December 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022521790 A
- JP 2022520317 A